# EUROPÄISCHE PATENTSCHRIFT

(11) **EP 0 692 523 B1**
(45) Veröffentlichungstag und Bekanntmachung des Hinweises auf die Patenterteilung: **05.09.2001**
(21) Anmeldenummer: 95110132.8
(22) Anmeldetag: 29.06.1995
(51) Int. Cl.: C09B 43/00, C09B 62/09, D06P 1/02, C09D 11/00, C09B 31/18

(54) **Azofarbstoffe, deren Herstellung und Verwendung**
Azo dyestuffs, their preparation and use
Colorants azoiques, leur préparation et leur utilisation

(30) Priorität: 12.07.1994 DE 4424484
(43) Veröffentlichungstag der Anmeldung: 17.01.1996
(73) Patentinhaber: BAYER AG, 51368 Leverkusen (DE)
(72) Erfinder: Hassenrück, Karin, Dr., D-40468 Düsseldorf (DE); Wild, Peter, Dr., D-51519 Odenthal (DE); Stöhr, Frank-Michael, Dr., D-51519 Odenthal (DE)

(56) Entgegenhaltungen:
- EP-A- 0 356 080
- US-A- 5 258 505
- PATENT ABSTRACTS OF JAPAN, unexamined applications, C Field, Band 15, Nr. 313, August 9, 1991 THE PATENT OFFICE JAPANESE GOVERNMENT Seite 8 C 857; & JP-A-03 115 363 (CANON INC.)
- PATENT ABSTRACTS OF JAPAN, unexamined applications, C Field, Band 15, Nr. 285, July 19, 1991 THE PATENT OFFICE JAPANESE GOVERNMENT Seite 105 C 851; & JP-A-03 100 081 (MITSUBISHI KASEI CORP.)

## Beschreibung

Schwarze Polyazofarbstoffe für den Tintenstrahldruck sind bereits aus DE-A 35 35 661, EP 356 080, JP-A-31 15 363 und JP-A-3 100 081 bekannt. Diese galt es jedoch in ihren anwendungstechnischen Eigenschaften zu verbessern.

Gegenstand der Erfindung sind Azofarbstoffe der allgemeinen Formel (I) 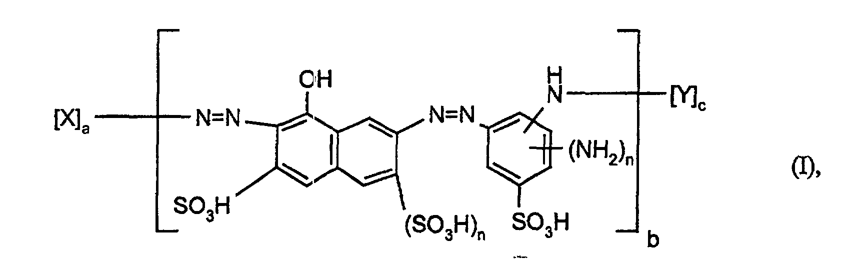 worin
- X: ein Rest der Formel (II) 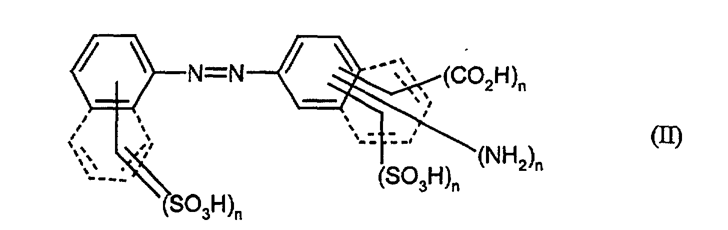
bedeutet oder für einen bivalenten Rest

-K-

steht und
- Y: für einen monovalenten Rest der Formel III 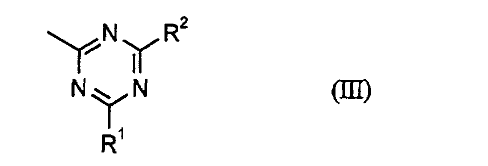
oder für einen bivalenten Rest der Formeln IV bis VIa steht, 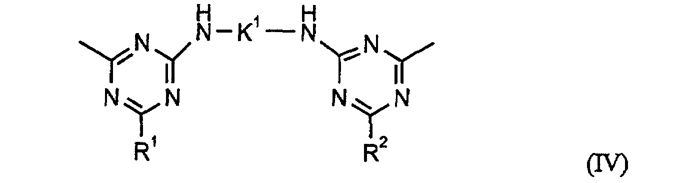 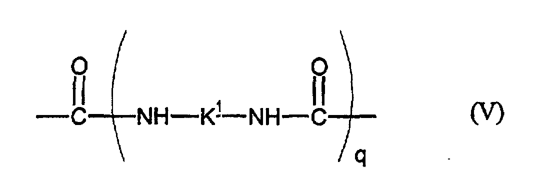 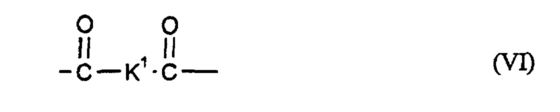 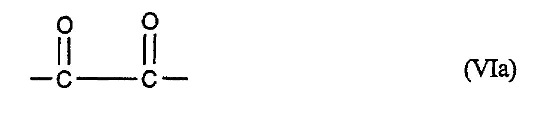 wobei
- n: jeweils unabhängig voneinander für 0 oder 1 steht,
- q: 0 oder 1 bedeutet,
- R¹ und R²: unabhängig voneinander für Halogen, Hydroxy, C₁-C₄-Alkoxy oder gegebenenfalls substituiertes Amin stehen,
- K: C₆-C₁₀-Arylen, Hetarylen, zwei voneinander unabhängige C₆-C₁₀-Aryleneinheiten, die direkt miteinander verbunden oder durch Hetarylen, C₁-C₆-Alkylen, C₂-C₆-Alkyliden oder Heteroatome unterbrochen sind, bedeutet,
- K¹: voneinander unabhängige C₁-C₆-Alkylen- und/oder C₂-C₆-Alkylideneinheiten, die direkt miteinander verbunden oder durch Hetarylen, C₆-C₁₀-Arylen oder Heteroatome unterbrochen sind oder die Bedeutung von K hat,

a, b und c unabhängig voneinander 1 oder 2 bedeuten,
a + c < 4,
a + b + c = 3 oder 5
und die freien Valenzen des Restes X jeweils mit der Azogruppe und die des Restes Y jeweils mit der Aminogruppe des mit b indizierten bivalenten Restes verknüpft sind.

Bevorzugte Farbstoffe der Formel I sind solche der Formel VII 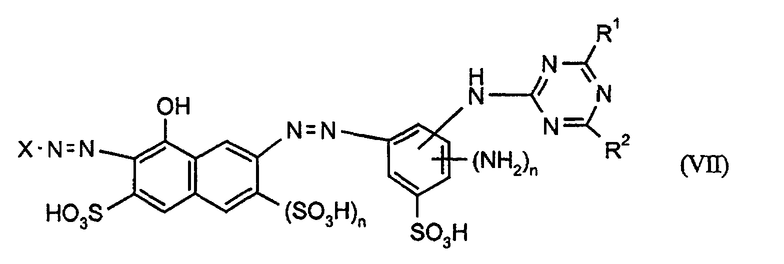 worin
- R¹ und R²: unabhängig voneinander ein substituiertes oder unsubstituiertes Amin bedeuten und der monovalente Rest X die obige Bedeutung hat.

Ebenfalls bevorzugt sind Farbstoffe der Formel I, die der Formel VIII entsprechen, 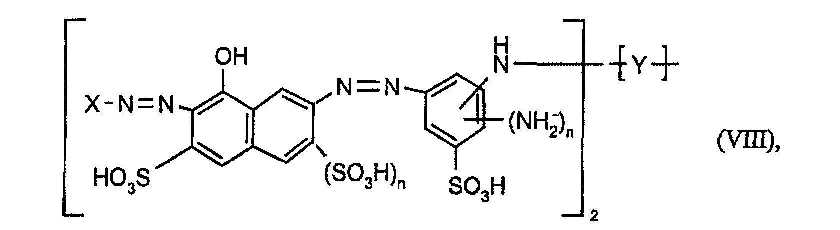 worin
- X: die obige Bedeutung des monovalenten Restes der Formel (II) und
- Y: die obige Bedeutung des bivalenten Restes besitzt,
sowie Farbstoffe der Formel I, die der Formel IX entsprechen, 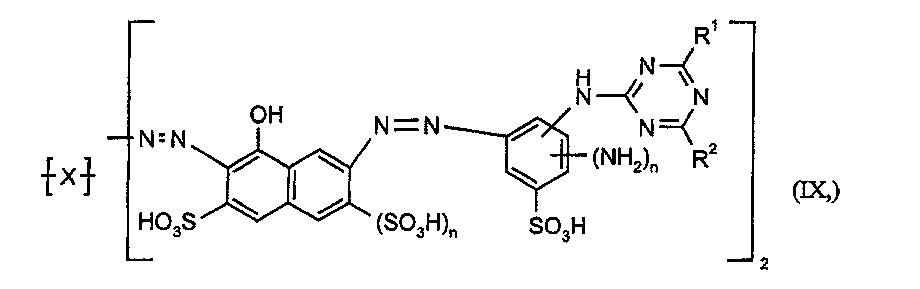 worin
- R¹ und R²: unabhängig voneinander für ein unsubstituiertes oder substituiertes Amin stehen und
- X: die obige Bedeutung des bivalenten Restes besitzt.

Besonders bevorzugte Farbstoffe der Formel I sind solche, worin
- X: für einen monovalenten Rest der Formeln IIa-IIf 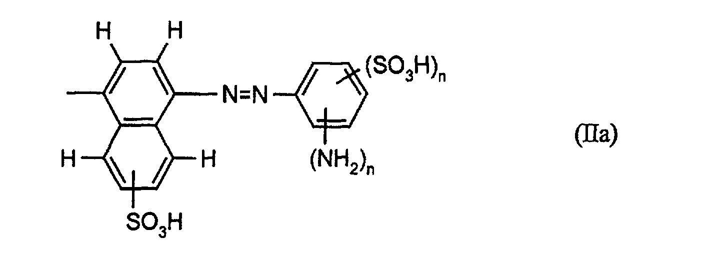 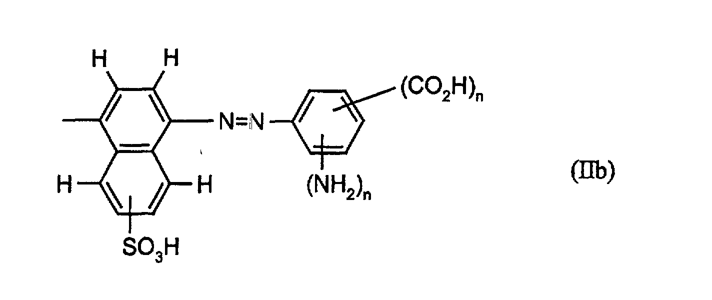 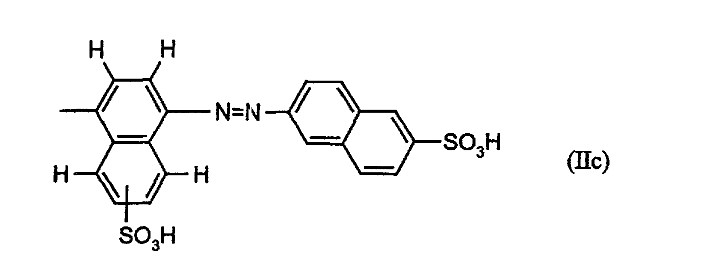 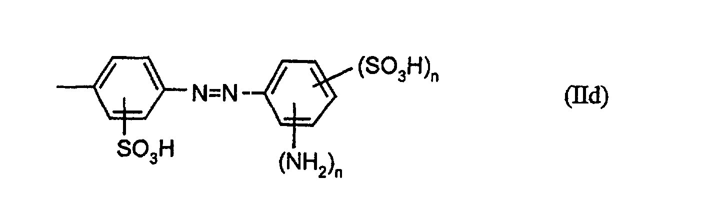 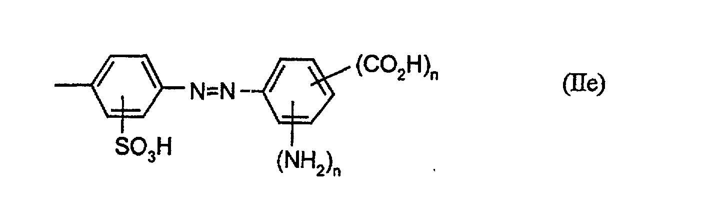 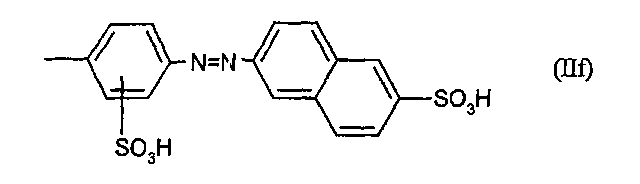
oder für einen bivalenten Rest K steht, worin
- K: für unsubstituiertes oder durch SO₃H, C₁-C₄-Alkyl, CO₂H und /oder NH₂ substituiertes Phenylen oder Naphthylen, einen 5- oder 6-gliedrigen heterocyclischen Ring, der ein oder mehrere, insbesondere 1 bis 3, Sauerstoffatome und/oder 1 bis 3 Stickstoffatome als Heteroatome enthält, zwei unsubstituierte oder unabhängig voneinander durch SO₃H, CO₂H, C₁-C₄-Alkyl und/oder NH₂ substituierte Phenylen- oder Naphthyleneinheiten, die direkt miteinander verbunden sind oder durch einen bivalenten heterocyclischen 5-oder 6-Ring, der ein oder mehrere, insbesondere 1-3 Sauerstoffatome und/oder 1-3 Stickstoffatome als Heteroatome enthält, ein gegebenenfalls verzweigtes C ₁-C₆-Alkylen, insbesondere C₂H₄, ein gegebenenfalls verzweigtes C₂-C₆-Alkyliden, insbesondere -CH=CH- oder durch Heteroatome wie O, S, NH,-NHCO- oder einen Rest der Formel

-NH-W-NH-

unterbrochen sind, worin W 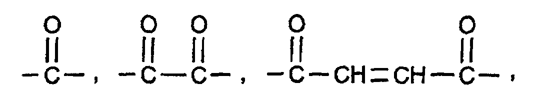 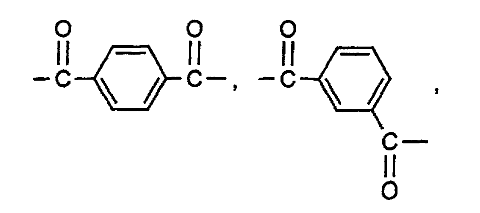 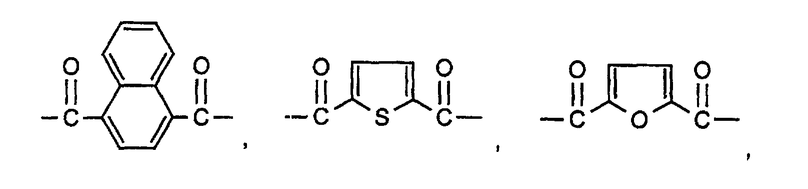 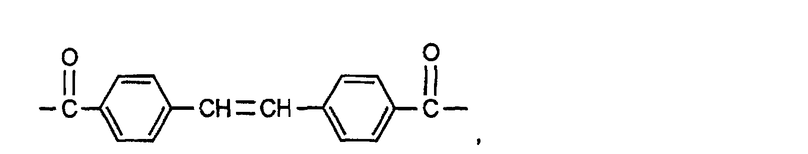 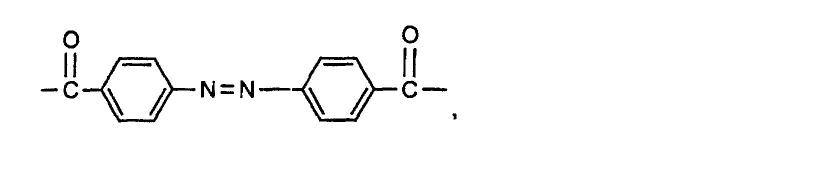 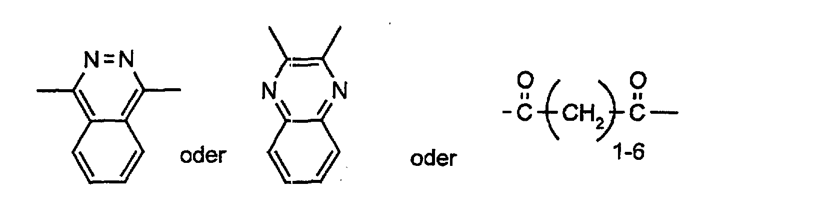 bedeuten, steht

Besonders bevorzugt sind ebenfalls Farbstoffe der Formel I, worin
- Y: für einen monovalenten Rest der Formel III steht, worin
- R¹ und R²: unabhängig voneinander Fluor, Chlor, Brom oder eine Aminogruppe der Formel NR³R⁴ bedeuten, wobei
- R³: H oder einen unsubstituierten oder durch Carboxy, Hydroxy, Amino, Sulfo, Sulfato und/oder C₁-C₄-Alkoxy substituierten C₁-C₁₀-Alkyl-, C₁-C₁₀-Cyclo-alkyl- oder C₆-C₁₀-Ar-C₁-C₁₀-Alkylrest bedeutet,
- R⁴: die Bedeutung von R³ hat oder für einen unsubstituierten oder durch Hydroxy, Carboxy, Sulfo, C₁-C₄-Alkyl und/oder C₁-C₄-Alkoxy substituierten C₆-C₁₀-Arylrest steht oder
- R³ und R⁴: zusammen mit dem Stickstoffatom, an das sie gebunden sind, einen heterocyclischen 5- oder 6-Ring bilden, der gegebenenfalls ein weiteres Heteroatom enthält, oder
- Y: für einen bivalenten Rest der Formel IV, V, VI oder VIa steht, wobei die Reste K¹, R¹ und R² die oben genannten bevorzugten Bedeutungen besitzen.

Ganz besonders bevorzugt sind Farbstoffe der Formel I, worin
- R¹ und R²: unabhängig voneinander für NR³R⁴ stehen, wobei
- R³: Wasserstoff, unsubstituiertes oder durch Carboxy, Hydroxy, Amino, Sulfo, Sulfato oder C₁-C₄-Alkoxy substituiertes C₁-C₆-Alkyl oder Cycloalkyl und
- R⁴: Wasserstoff, unsubstituiertes oder durch Hydroxy, Phenyl, Naphthyl, C₁-C₄-Alkoxy, Sulfato, Sulfoamino oder Carboxy substituiertes C₁-C₆-Alkyl, unsubstituiertes oder durch ein oder zwei Substituenten aus der Gruppe Hydroxy, Carboxy, Sulfo, C₁-C₄-Alkyl und C₁-C₄-Alkoxy substituiertes Phenyl oder Naphthyl bedeuten oder worin
- R³ und R⁴: zusammen mit dein Stickstoffatom, an das sie gebunden sind einen heterocyclischen 5- oder 6-Ring bilden, der ein oder zwei Heteroatome, insbesondere Stickstoff und/oder Sauerstoff enthält, wie beispielsweise einen Morpholin-, Piperidin- oder Piperazin-Ring.

Beispiele für gegebenenfalls substituierte Amine der Formel -NR³R⁴ sind NH₂, NHCH₃, N(CH₃)₂, N(C₂H₅)₂, NHC₂H₅, NHCH₂CH₂OH, NHCH₂CH₂OCH₃, 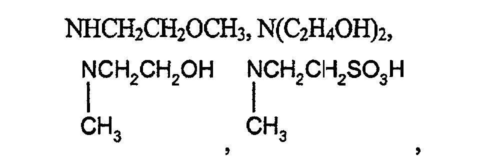 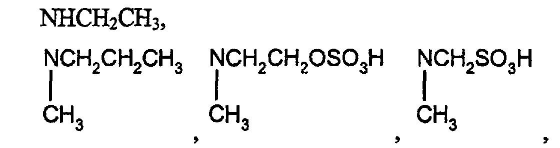 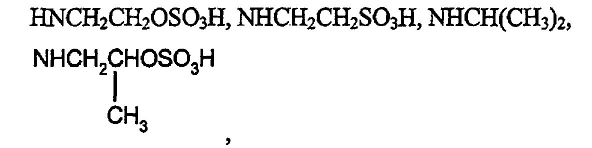 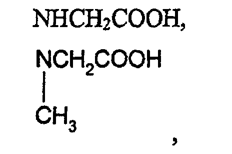 NHCH₂CH₂COOH, N(C₂H₄OSO₃H)₂, NH(CH₂)₁₀COOH,
NH(CH₂CH₂NH)ₚ-CH₂CH₂NH₂(p=0-4), NHCH₂CH₂N(CH₃)CH₂CH₂OH,

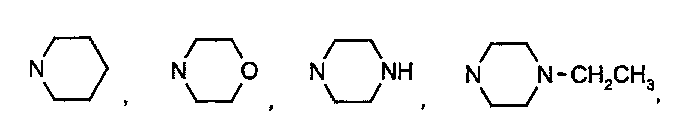

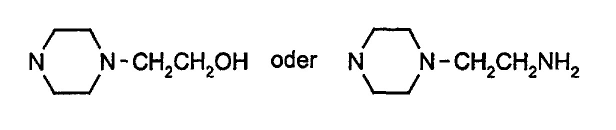

Beispiele für bivalente Y-Reste der Formel V sind

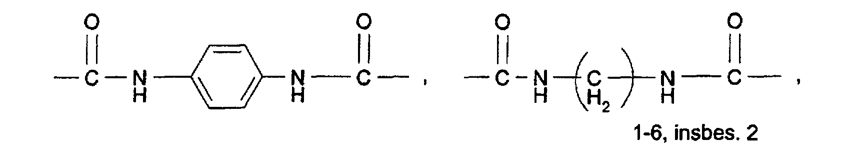

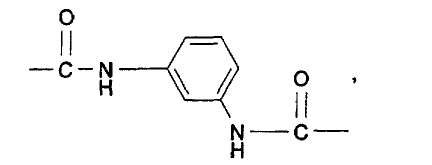

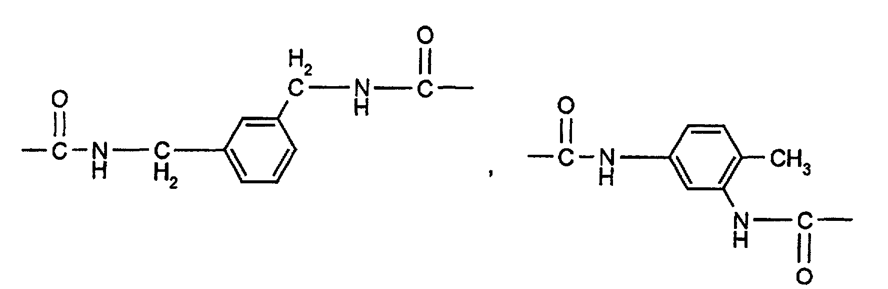

Beispiele für bivalente Reste der Formel K sind: 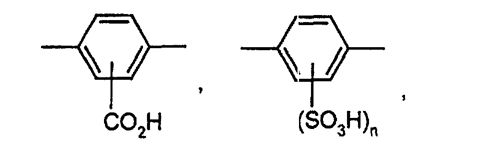 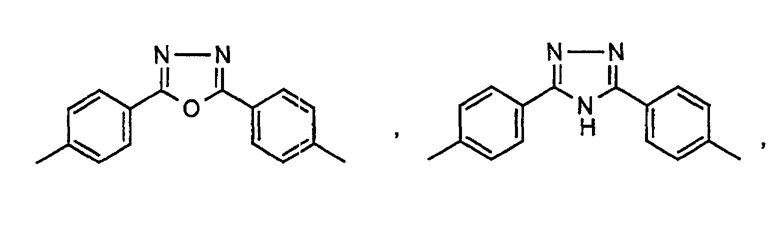 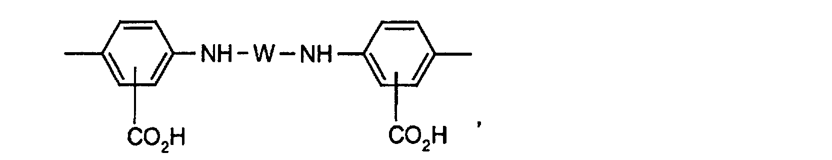 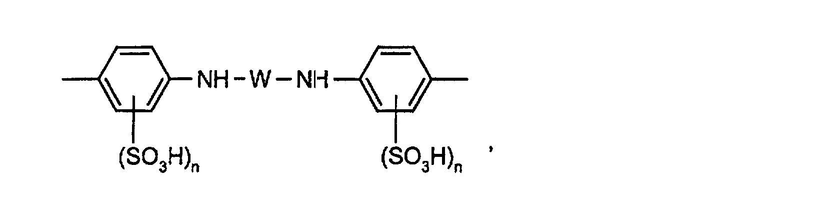 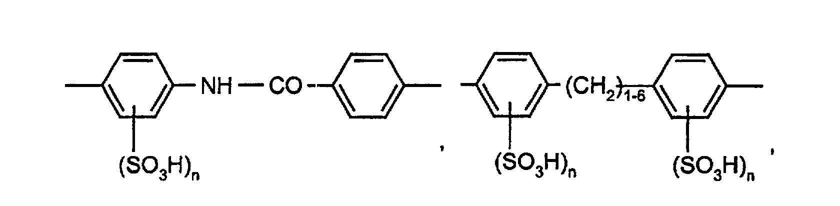 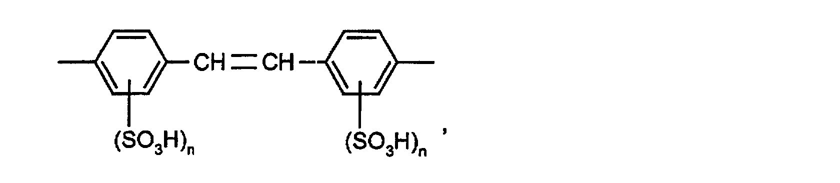 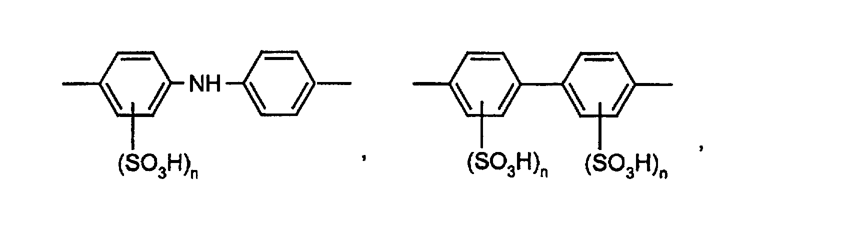 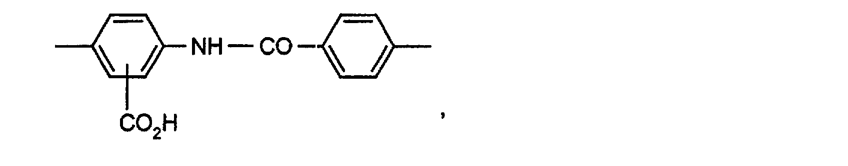 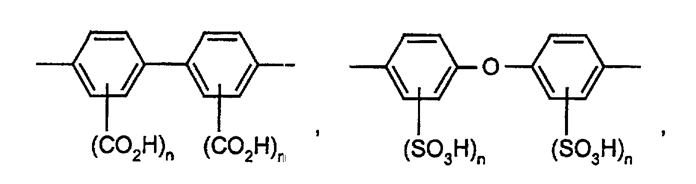 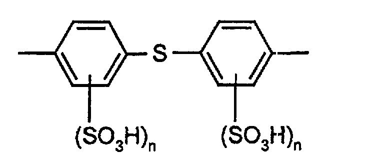 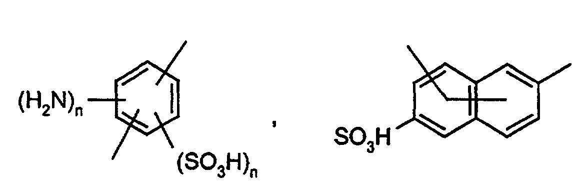 oder 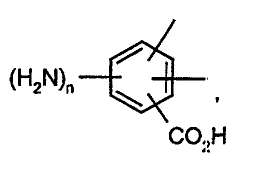 wobei bei mehreren n-indizierten Substituenten pro Molekül n jeweils unabhängig voneinander für 0 oder 1 steht und
- W: für 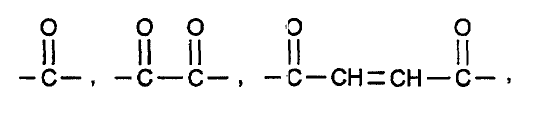 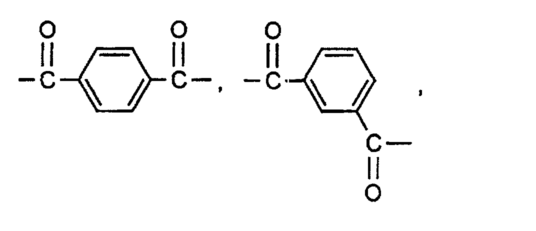 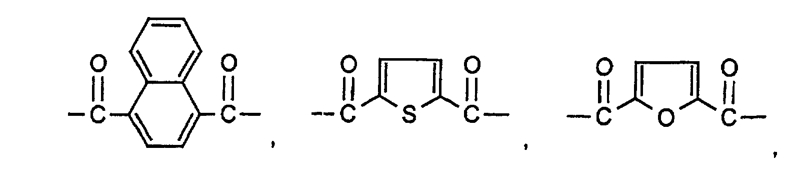 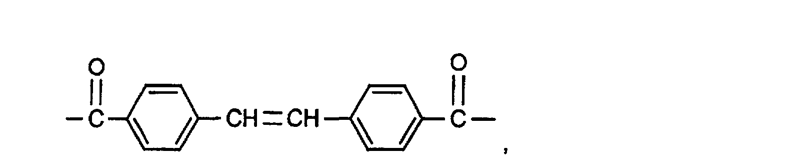 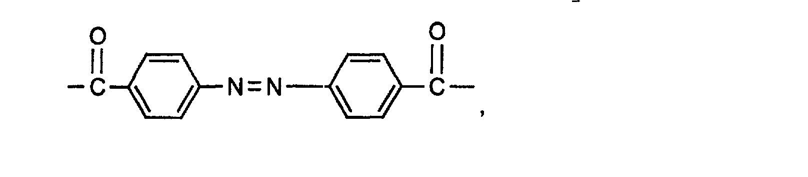 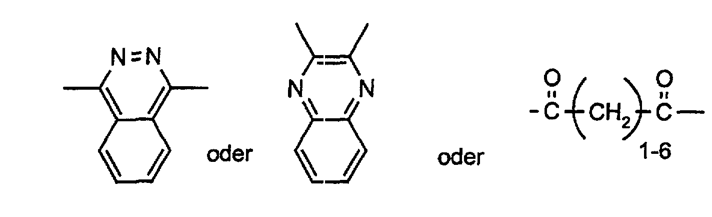 steht.

Die Erfindung betrifft weiterhin ein Verfahren zur Herstellung von Farbstoffen der Formel (I), dadurch gekennzeichnet, daß man Farbbasen der Formel X 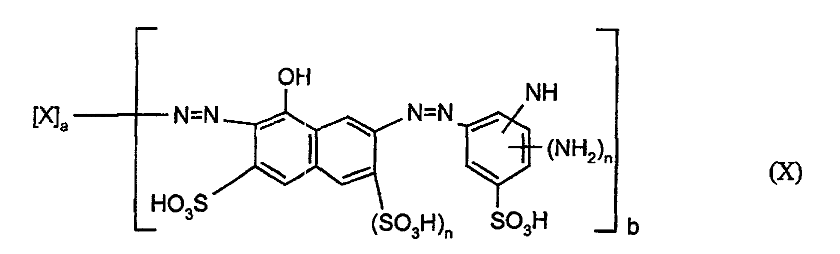 worin
- n und: X die oben angegebenen Bedeutungen besitzen,
- a = 1: und
- b = 1: für den Fall, daß X für einen monovalenten Rest steht und
- b = 2: für den Fall, daß X für einen bivalenten Rest steht,
mit einer Verbindung der Formeln XIa - XIe 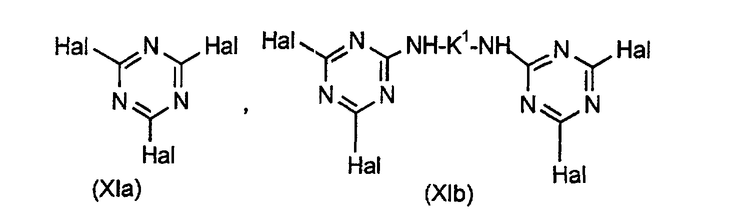 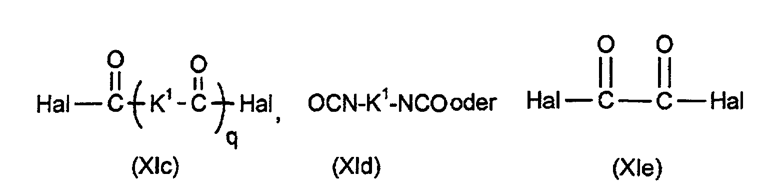 umsetzt, worin
- K¹ und q: die oben angegebenen Bedeutungen besitzen und
- Hal: jeweils unabhängig voneinander für Fluor, Chlor oder Brom steht,
und gegebenenfalls weiter umsetzt zu Verbindungen der Formel (I), worin R¹ und R² Hydroxy, C₁-C₄-Alkoxy oder ein substituiertes oder unsubstituiertes Amin bedeuten.

Die Kondensation der Farbbase X mit einer Verbindung der Formeln (XIa-XIc) erfolgt vorzugsweise in wäßrigem oder wäßrig organischem Medium bei Temperaturen von 20-60°C, wobei gegebenenfalls die bei der Kondensation freiwerdende Halogenwasserstoffsäure abgefangen wird.

Die Addition der Farbbase der Formel X mit einer Verbindung der Formel XId erfolgt vorzugsweise in wäßrigem oder wäßrig organischem Medium bei Temperaturen von 10-60°C.

Bei der Umsetzung mit halogentriazinhaltigen Verbindungen kann in einer weiteren Kondensation Halogen gegen Amino oder Alkohlreste der Formel HR¹ oder HR² ausgetauscht werden, wobei dies durch Umsetzung mit Aminverbindungen der Formel HNR³R⁴ oder C₁-C₄-Alkoholen erreicht wird.

Diese Kondensation wird ebenfalls im wäßrigen oder wäßrig organischen Medium bei Temperaturen von 60-100°C ausgeführt, wobei der bei der Kondensation freiwerdende Halogenwasserstoff durch Zugabe von säurebindenden Mitteln neutralisiert wird. Säurebindende Mittel sind neben Alkali- oder Erdalkalihydrogencarbonaten, -carbonaten, -hyroxiden, -phosphaten oder -boraten auch Amine der Formeln HNR³R⁴, die im Überschuß eingesetzt werden. Daneben können auch tertiäre Amine wie Triethylamin oder Pyridinbasen wie Pyridin, Picolin oder Cholin verwendet werden.

Die erfindungsgemäßen Farbstoffe färben cellulosehaltige Materialien, insbesondere Papier, Baumwolle und Viskose sowie Leder mit guten Naß- und Lichtechtheiten.

Die Farbstoffe können nach allen in der Papier- und Textilindustrie für substantive Falbstoffe gebräuchlichen Verfahren verwendet werden, insbesondere in der Massen- wie in der Oberflächenfärbung von Papier für geleimte oder ungeleimte Sorten, ausgehend von gebleichten oder ungebleichten Zellstoff verschiedener Provenienz wie Nadel- oder Laubholz-sulfit- und/oder -sulfat-Zellstoff. Sie können auch in der Garn- und Stückfärberei von Baumwolle, Viskose und Leinen nach dem Ausziehverfahren aus langer Flotte oder in Kontinueverfahren angewandt werden.

Die Erfindung betrifft weiterhin flüssige Farbstoffpräparationen enthaltend mindestens einen Farbstoff der Formel (I). Diese Anwendungsform ist insbesondere beim Färben von Papier bevorzugt. Die Verarbeitung in stabile flüssige, vorzugsweise wäßrige, konzentrierte Färbepräparate kann auf allgemein bekannte Weise erfolgen, vorteilhaft durch Lösen in geeigneten Lösungsmitteln, gegebenenfalls unter Zugabe eines Hilfsmittel, z.B. einer hydrotropen Verbindung oder eines Stabilisators. Von besonderem Vorteil ist die Herstellungsmöglichkeit solcher stabilen, wäßrig-konzentrierten Präparationen im Zuge der Farbstoffsynthese selbst ohne Zwischenisolierung des Farbstoffes.

Geeignete hydrotrope Hilfsmittel sind beispielsweise niedermolekulare Amide, Laktone, Alkohole, Glykole oder Polyole, niedermolekulare Äther oder Oxylkylierungsprodukte sowie Nitrile oder Ester; in Betracht kommen dabei bevorzugt Methanol, Äthanol, Propanol; Äthylen-, Propylen-, Diäthylen-, Thiodiäthylen- und Dipropylen-glykol; Butandiol; β-Hydroxypropionitril, Pentamethylenglykol, Äthylenglykolmonoäthyl- und -propyläther, Äthylendiglykolmonoäthyläther, Triäthylenglykolmonobutyläther, Butylpolyglykol, Formamid, Dimethylformamid, Pyrrolidon, N-Methylpyrrolidon, Glykolacetat, Butyrolakton, Harnstoff und ε-Caprolactam.

Weiterhin können die Farbstoffe der Formel I auch in Tinten im Ink-Jet-Verfahren eingesetzt werden.

Die Tinten enthalten im allgemeinen etwa 1 bis 20 Gew.-% eines oder mehrerer Farbstoffe der Formel (I), 80 bis 90 Gew.-% Wasser und/oder polare protische oder dipolare aprotische Lösungsmittel sowie gegebenenfalls weitere übliche Bestandteile.

Bevorzugte Lösungsmittel sind dabei mehrwertige Alkohole und deren Ether oder Ester, Carbonsäureamide, Sulfoxide und Sulfone, insbesondere solche mit Molekulargewichten <200. Besonders geeignete Lösungsmittel sind beispielsweise: Ethylenglykol, Diethylenglykol, Triethylenglykol, 1,5-Pentandiol, Essigsäure-2-hydroxyethylester, Glycerin, 1,2-Dihydroxypropan, 1-Methoxy-2-propanol, 2-Methoxy-1-propanol, N,N-Dimethylfomamid, Pyrrolidon, ε-Caprolactam, N-Methyl-caprolactam, Tetramethylharnstoff, 1,3-Dimethyl-2-imidazolidinon, N,N'-Dimethylpropylenharnstoff, Dimethylsulfoxid, Dimethylsulfon, Sulfolan.

Bevorzugt sind Tinten mit folgender Zusammensetzung:
- 0,5 bis 20 Gew.-% eines oder mehrerer erfindungsgemäßer Farbstoffe,
- 50 bis 99,5 Gew.-% Wasser
- 0 bis 30 Gew.-% eines oder mehrere organische Lösungsmittel und/oder hydrotrop wirkender Mittel,
- 0 bis 30 Gew.-% Viskosität und/oder Oberflächenspannung beeinflussende Zusätze,
wobei sich die Summe der genannten Inhaltsstoffe auf 100 Gew.-% ergänzt.

Die Tinten können durch Auflösen der Salze des Farbstoffs (I) in Wasser oder aus den Kondensationslösungsn, die gegebenenfalls einer Entsalzung z.B. durch Druckpermeation unterworfen werden und/oder Zusatz eines oder mehrerer der oben genannten organischen Lösungsmitteln gegebenenfalls bei erhöhten Temperaturen und unter Zusatz von anorganischen und organischen Basen hergestellt werden; gegebenenfalls können zusätzlich noch übliche ionische oder nicht-ionische Zusatzstoffe verwendet werden, z.B. solche mit denen die Viskosität erniedrigt und/oder die Oberflächenspannung erhöht werden können.

Anstelle der Salze von (I) können auch die entsprechenden freien Säuren in Kombination mit mindestens äquimolaren Mengen der entsprechenden Basen eingesetzt werden.

Als anorganische Basen können z.B. Lithiumhydroxid, Natiumhydroxid, Kaliumhydroxid, Lithiumcarbonat, Natriumcarbonat, Kaliumcarbonat eingesetzt werden.

Als organische Basen können z.B Ethanolamin, Diethanolamin, Triethanolamin, N-Methylethanolamin, N,N-Dimethylethanolamin, N-Methyldiethanolamin, 1-Amino-2-propanol, 2-Amino-1-propanol, Di-isopropanolamin, N-2-Hydroxyethyldiisopropanolamin, Tris-N,N,N-[2'(2'-hydroxyethoxy)-ethyl]amin oder Natriummethylat, Lithiumethylat, Kalium-tert-butylat dienen.

Die Tinte der Erfindung besitzt folgende Vorteile: Die physikalischen Eigenschaften, wie Viskosität, Oberflächenspannung und dergleichen, liegen in den geeigneten Bereichen; die Tinte verursacht keine Verstopfungen in feinen Abgabeöffnungen von Tintenstrahl-Aufzeichnungsvorrichtungen; sie liefert Bilder von hoher Dichte; bei der Lagerung kommt es in der Tinte nicht zu einer Veränderung von physikalischen Eigenschaften und zur Ablagerung von festen Bestandteilen; die Tinte eignet sich zur Aufzeichnung auf verschiedenen Aufzeichnungsmedien ohne Beschränkungen hinsichtlich der Art der Aufzeichnungsmedien; und schließlich fixiert die Tinte rasch und ergibt Bilder mit ausgezeichneter Wasserfestigkeit, Lichtechtheit, Abriebbeständigkeit und Auflösung.

### Beispiel 1

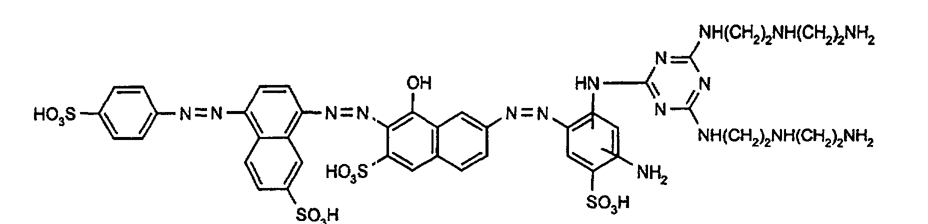

- 51 g: feuchte Paste des Aminotrisazofarbstoffes (30 %) hergestellt durch
Diazotierung von Sulfanilsäure und Kupplung auf 1-Aminonaphthalin-7-sulfosäure, Weiterdiazotierung und Kupplung auf γ-Säure, Weiterdiazotierung und Kupplung auf 1,3-Diaminobenzol-4-sulfosäure, werden in
- 150 ml: Wasser vorgelegt und bei 0-5°C mit
3,7 g Cyanurchlorid eingetragen. Gleichzeitig wird der pH durch Zutropfen von 5 %-iger NaOH-Lösung bei pH 6 gehalten. Anschließend wird 2,5 h bei 0-5°C und pH 6 gerührt und dann in 30 Minuten auf Raumtemperatur erwärmt. Diesem Reaktionsgemisch werden
9,2 g Diethylentriamin (entspricht Teilformel HR¹ bzw. HR²) zugesetzt. Die Temperatur wird auf 85°C erhöht und 30 Minuten gehalten. Nach dem Abkühlen auf Raumtemperatur wird mit HCl/H₂O auf pH 7 gestellt und abgesaugt, mit H₂O gewaschen und das Produkt getrocknet. Man erhält 17,1 g Farbstoff λₘₐₓ (H₂O) 582 nm.

5 Teile dieses Farbstoffs werden in 80 Teilen Wasser eingerührt und der pH-Wert durch Zugabe von 2N Natronlauge auf 9,5 gestellt. Durch Zugabe von Wasser wird ein Gesamtgewicht von 100 Teilen eingestellt, sodaß eine ca. 5%ige erfindungsgemäße flüssige Farbstoffpräparation des obigen Farbstoffs erhalten wird.
(γ-Säure = 1 -Hydroxy-7-amino-3-naphthalinsulfonsäure)

### Beispiel 2

Eine Mischung aus 50 % gebleichtem Kiefern-Sulfatzellstoff und 50 % gebleichtem Birken-Sulfatzellstoff wird bei einer Stoffdichte von 2,5 % auf einen Mahlgrad von 36° SR gemahlen.

Zu 200 Teilen dieser Suspension, enthaltend 5 Teile Zellstoff, gibt man in einem Becherglas 20 ml einer 3%igen wäßrigen Lösung der erfindungsgemäßen flüssigen Farbstoffpräparation aus Beispiel 1 (3 % bezogen auf Zellstoff) und rührt 5 Minuten. Anschließend setzt man 10 Teile einer 1%igen Harzleim-Lösung zu, nach einer weiteren Minute 15 Teile einer 1%igen Aluminium-Lösung, verdünnt mit 800 Teilen Wasser und rührt weitere 3 Minuten.

Aus dieser Zellstoffsuspension bildet man ein Papierblatt auf einem Handblattbildner, preßt das erhaltene Blatt in einer Handpresse ab und trocknet auf einem Trockenzylinder 10 Minuten bei 100°C unter zweimaligem Wenden.

Die so erhaltene Papierfärbung zeigt ein neutrales Schwarz in hoher Farbtiefe und weist eine gute Ausblut- und Lichtechtheit auf.

### Beispiel 3

30 Teile der nach Beispiel 1 erhaltenen flüssigen Farbstoffpräparation (Farbstoffgehalt ca. 5 %) werden mit einem Gemisch aus 61 Teilen Wasser und 9 Teilen Diethylenglykol verdünnt. Die so erhaltene Tinte mit einem Farbstoffgehalt von ca. 1,5 % liefert mittels eines Hewlett-Packard DeskJet-Druckers (DeskJet ist ein eingetragenes Warenzeichen der Hewlett-Packard Company, USA) auf üblichen Schreibpapieren Drucke in licht- und naßechten Schwarz-Tönen.

Analog zu Beispiel 1 werden Beispiele 4 - 8 hergestellt durch Einsatz eines anderen Amins:

| Beispiel | Amin HR¹ bzw. HR² | λₘₐₓ [nm] (H₂O) |
|---|---|---|
| 4 | Triethylentetramin | 583 |
| 5 | Tetraethylenpentamin | 582 |
| 6 | Pentaethylenhexamin | 587 |
| 7 | Aminoethylpiperazin | 580 |
| 8 | Polyethylenimin | 592 |

Analog zu Beispiel 1 werden die Beispiele 9-17 hergestellt, die der allgemeinen Formel VII entsprechen, 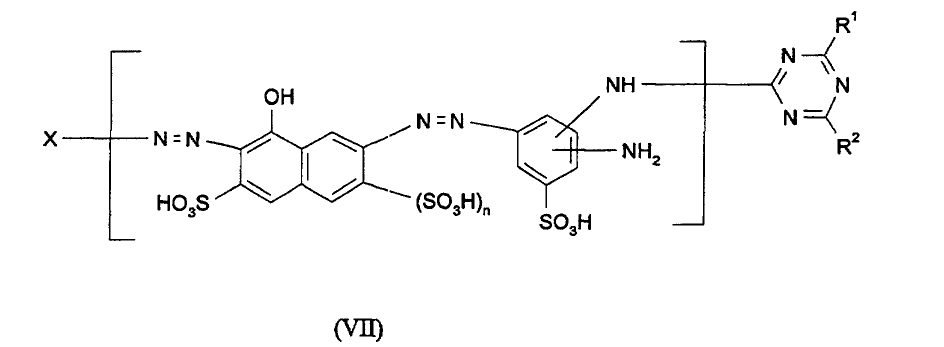 worin X, n R¹ und R² die nachfolgenden Bedeutungen besitzen.

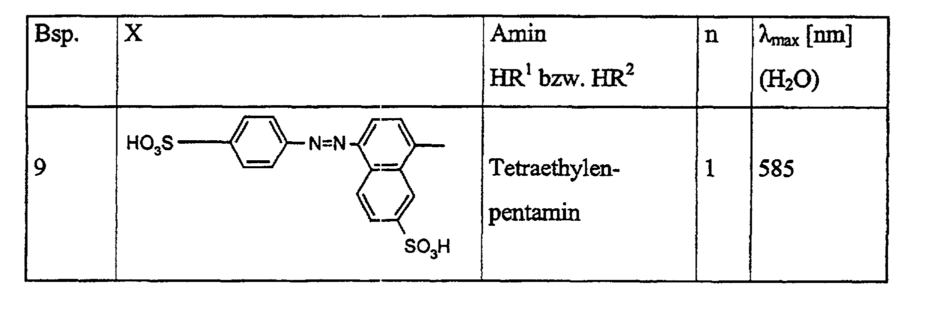

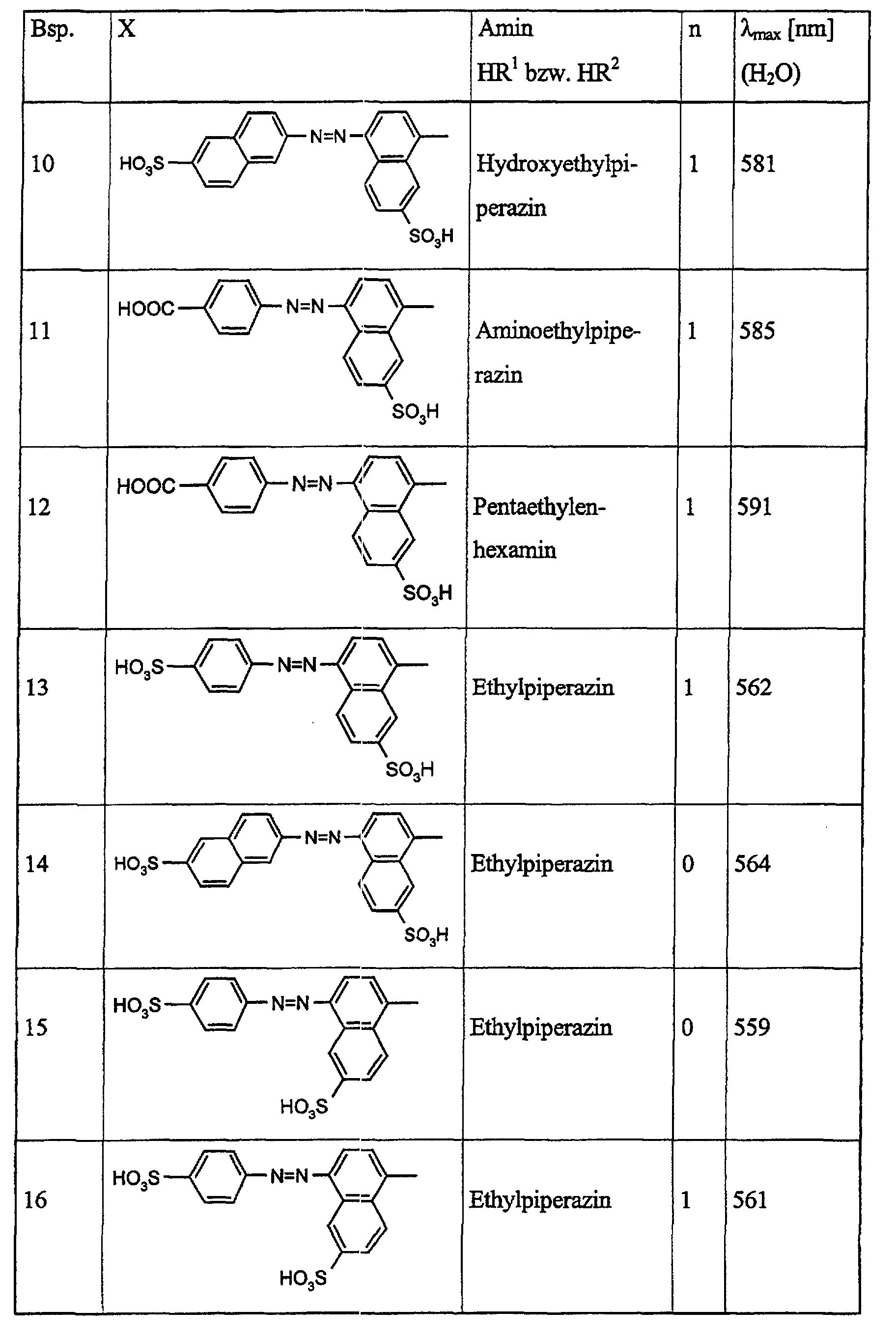

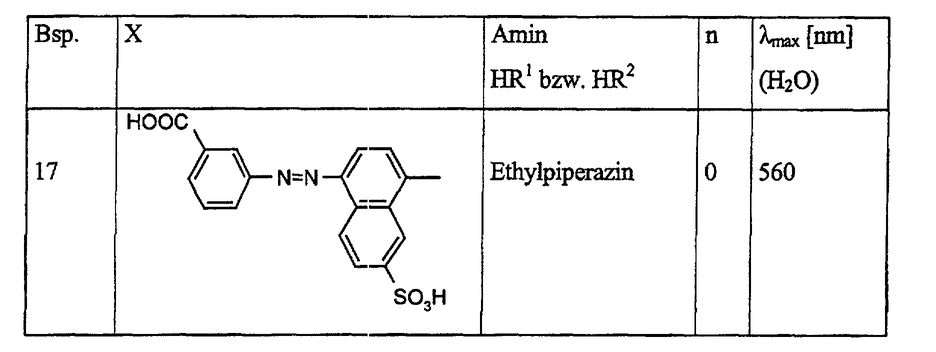

### Beispiel 18

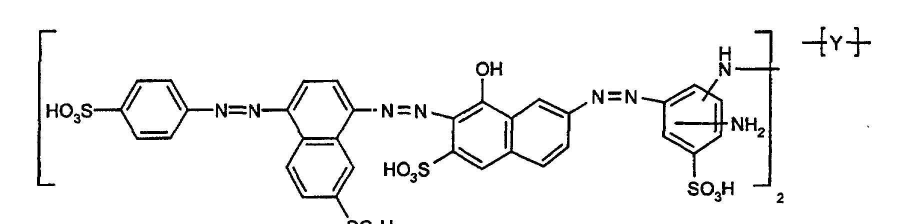

wobei
- Y=: 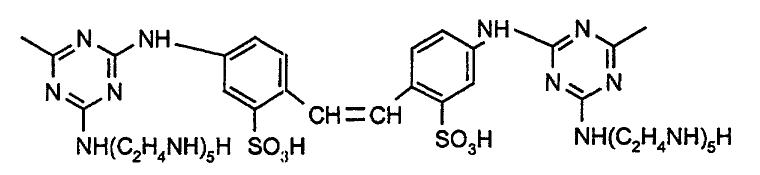
Zu
- 8 g: Cyanurchlorid in
- 600 ml: Eiswasser werden
- 93 ml: Natriumflavonatlösung (~ 10 %) bei pH 2-2,5 in 2 h zugetropft. Nach dem Erwärmen auf Raumtemperatur werden
- 39 g: (75 %) getrockneter Aminotrisazofarbbase (der auch in Beispiel 1 eingesetzt wird) zugegeben. Der pH-Wert wird mit 10 %iger NaOH-Lösung bei 6,5 gehalten. Es wird auf 50°C erhitzt und 3 h bei dieser Temperatur gehalten. Diesem Reaktionsgemisch werden
- 10,2 g: Pentaethylenhexamin zugesetzt. Die Temperatur wird auf 80°C erhöht und 30 Minuten gehalten. Nach dem Abkühlen auf Raumtemperatur wird mit HCl/H₂O auf pH 7,5 gestellt, abgesaugt, mit 5 % NaCl-Lösung gewaschen und das Produkt getrocknet.
Man erhält 49 g Farbstoff λₘₐₓ(H₂O) 592 nm.

5 Teile dieses Farbstoffs werden in 80 Teilen Wasser eingerührt und der pH-Wert durch Zugabe von 2N Natronlauge auf 9,5 gestellt. Durch Zugabe von Wasser wird ein Gesamtgewicht von 100 Teilen eingestellt, sodaß eine ca. 5%ige erfindungsgemäße flüssige Farbstoffpräparation des obigen Farbstoffs erhalten wird. Diese kann analog Beispiel 1 zur Herstellung von Tinten nach Beispiel 6 verwandt werden, mit der beim Inkjet-Druck naßechte Töne erreicht werden.

Analog zu Beispiel 18 werden die Beispiele 19-24 hergestellt, die der allgemeinen Formel VIII entsprechen, 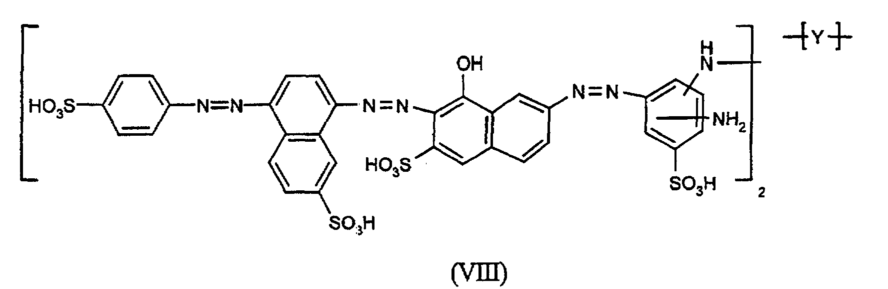 mit
- Y=: 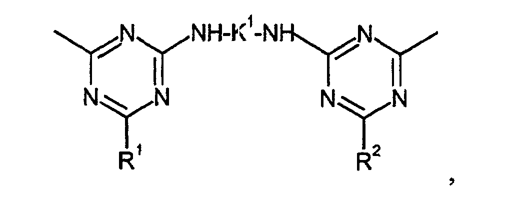
worin

K¹, R¹ und R² die nachfolgenden Bedeutungen besitzen:

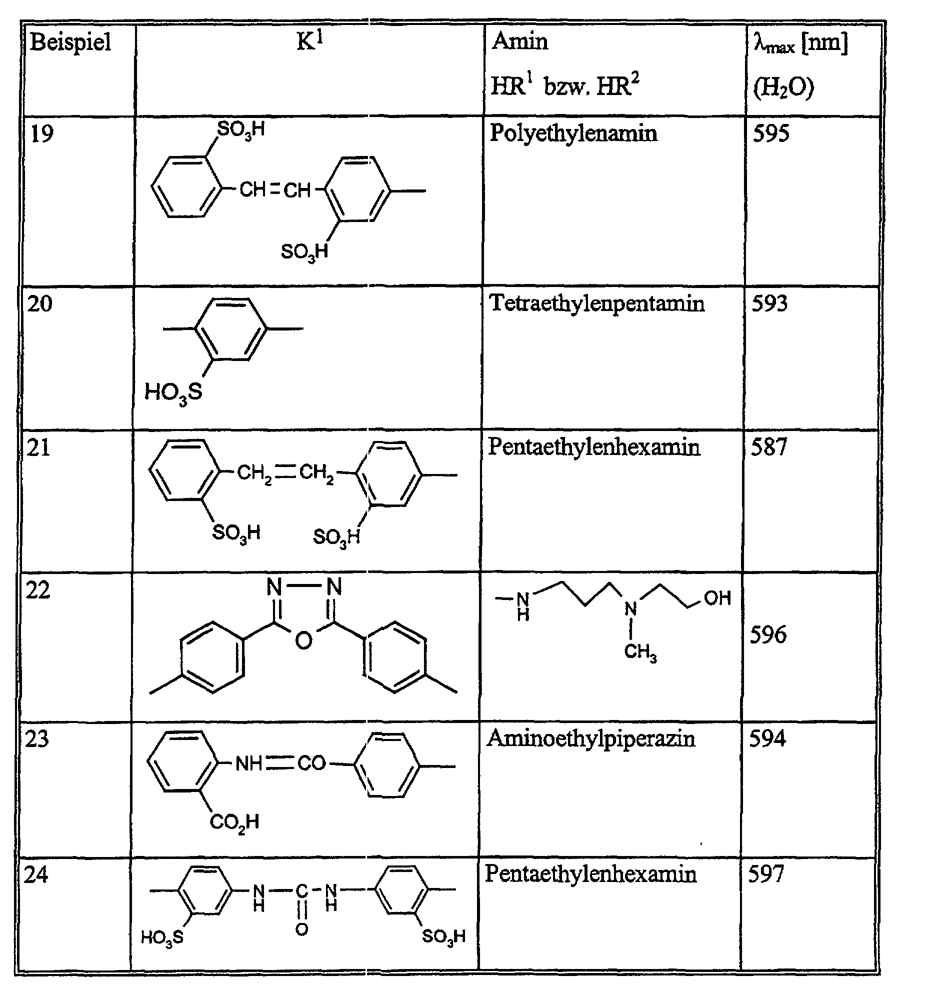

Analog zu Beispiel 18 werden die Beispiele 25-28 hergestellt, die der allgemeinen Formel VIII entsprechen 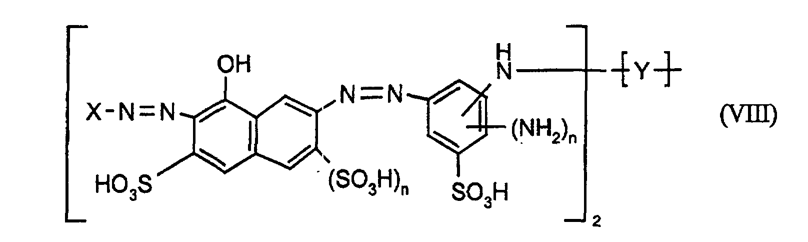 mit
- Y=: 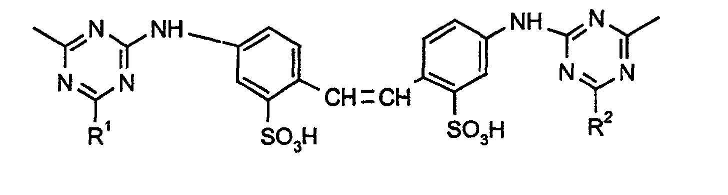
worin
X, R¹, R und n die nachfolgenden Bedeutungen haben:

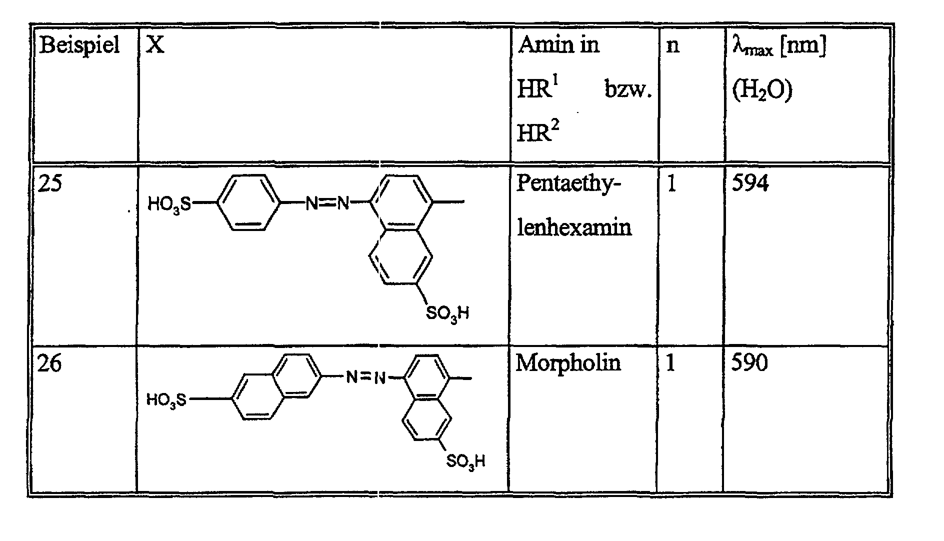

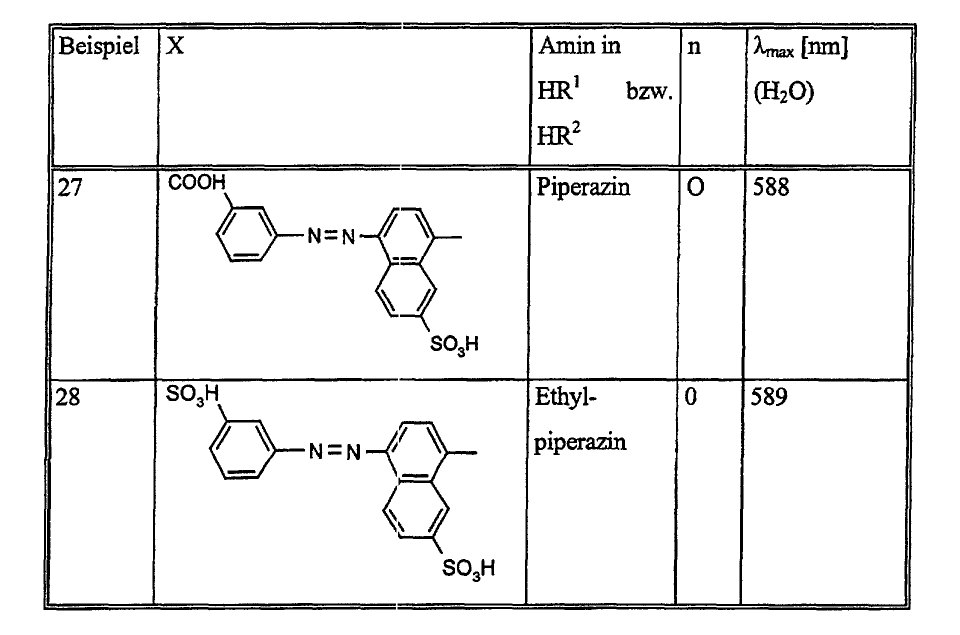

### Beispiel 29

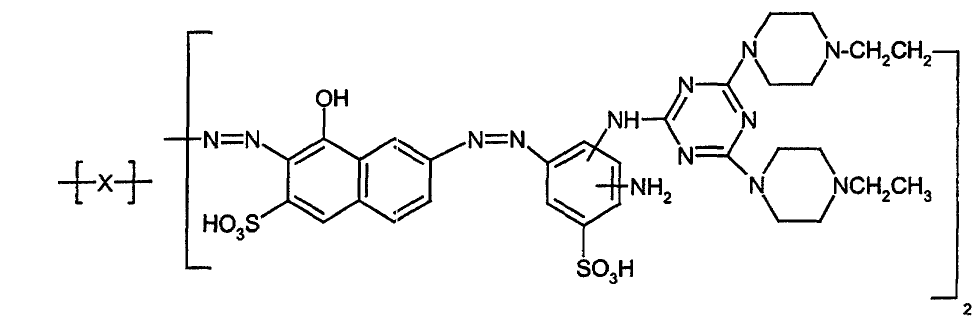

mit
- X =: 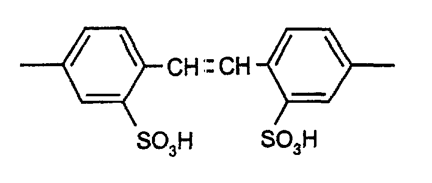
- 20 g: Aminoazofarbstoff (~ 70 %), hergestellt durch Tetrazotierung von Flavonsäure und Kupplung auf 2-Amino-8-oxynaphthalin-6-sulfosäure Weitertetrazotieren und Kuppeln auf 1,3-Diaminobenzol-4-sulfosäure werden in
100 ml Wasser vorgelegt und mit
6 g Cyanurchlorid, in
100 ml Eiswasser suspendiert, versetzt.
Gleichzeitig wird der pH-Wert mit 5 %-iger NaOH-Lösung bei 6 gehalten und in 1 h auf Raumtemperatur erwärmt. Nach 3 h bei Raumtemperatur werden
26 g Ethylpiperazin (entspricht Teilformel HR¹ bzw. HR²) zugesetzt. Die Temperatur wird auf 80°C erhöht und 30 Minuten gehalten.
Nach dem Abkühlen auf Raumtemperatur wird mit
53 g NaCl ausgesalzen, abgesaugt, mit 10 %-iger NaCl-Lösung gewaschen und dann das Produkt getrocknet.
Man erhält 26 g Farbstoff λₘₐₓ (H₂O⁾ 560 nm.

5 Teile dieses Farbstoffs werden in 80 Teilen Wasser eingerührt und der pH-Wert durch Zugabe von 2N Natronlauge auf 9,5 gestellt. Durch Zugabe von Wasser wird ein Gesamtgewicht von 100 Teilen eingestellt, sodaß eine ca. 5%ige erfindungsgemäße flüssige Farbstoffpräparation des obigen Farbstoffs erhalten wird. Diese kann analog Beispiel 1 zur Herstellung von Tinten nach Beispiel 6 verwandt werden, die im Inkjet Druck naßechte Töne liefern.

Analog zu Beispiel 29 werden die Beispiele 30 - 34 hergestellt, die der allgemeinen Formel IX entsprechen 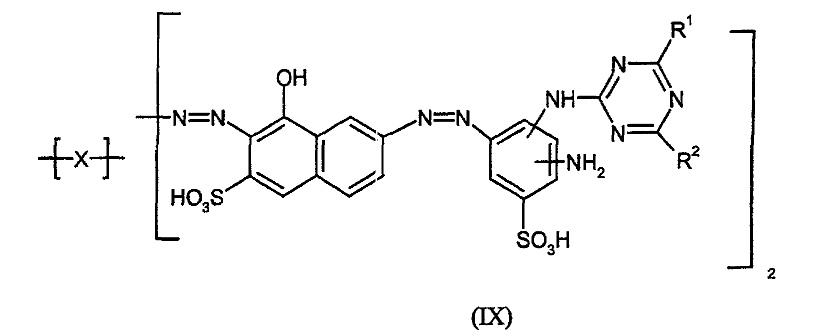 worin
X, R¹ und R² die nachfolgenden Bedeutungen haben:

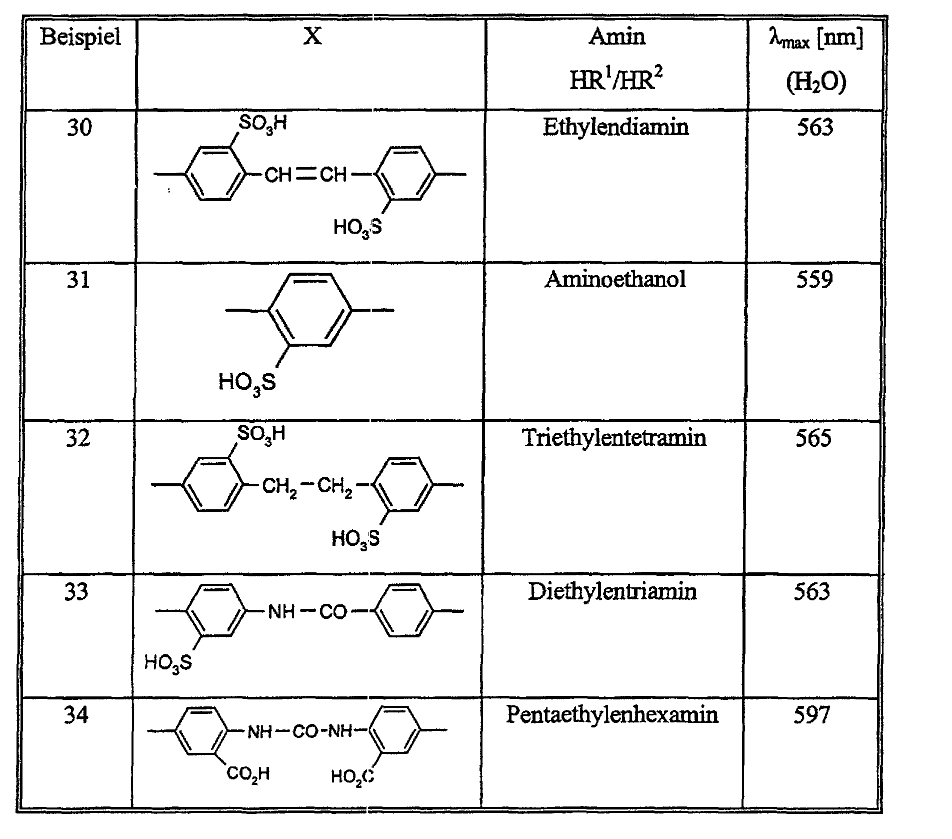

### Beispiel 35

51 g feuchte Paste des Aminotrisazofarbstoffes, der bereits in Beispiel 1 als Farbbase eingesetzt wurde (Ausgangsmaterial), werden in 150 ml Wasser vorgelegt und bei Raumtemperatur mit
2,9 g 1,4 Diisocyanatobenzol versetzt.
Gleichzeitig wird der pH durch Zutropfen von 5 %iger LiOH-Lösung bei pH 8 gehalten.
Nach beendeter Reaktion wird mit HCl/H₂O auf pH 6 gestellt, abgesaugt, mit H₂O gewaschen und getrocknet. Man erhält 16,7 g Farbstoff λₘₐₓ (H₂O) 587 nm der Formel

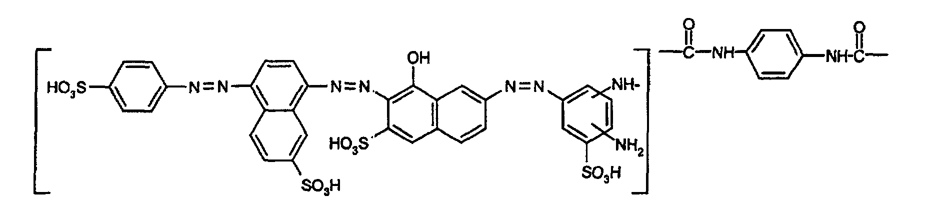

Analog zu Beispiel 1, 2 und 3 wurde eine flüssige Farbstoffpräparation und Tinte hergestellt.

## Patentansprüche

1. Azofarbstoffe der Formel (I) 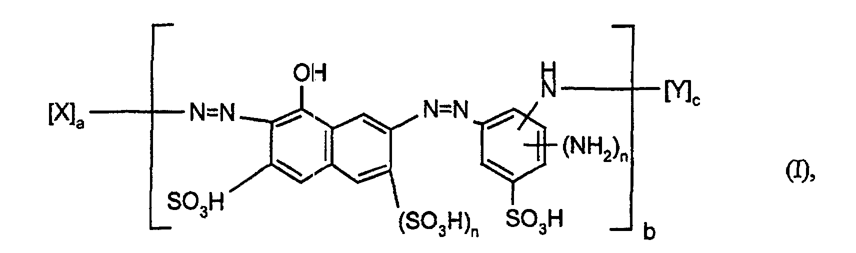 worin
X ein Rest der Formel (II) 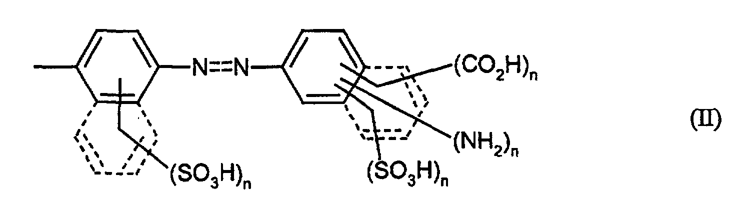
bedeutet oder für einen bivalenten Rest
-K-
steht und
Y für einen Rest der Formel III 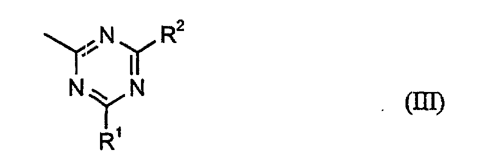
oder für einen bivalenten Rest der Formeln IV bis VIa steht, 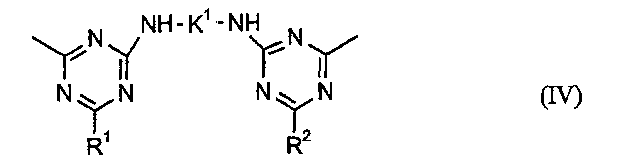 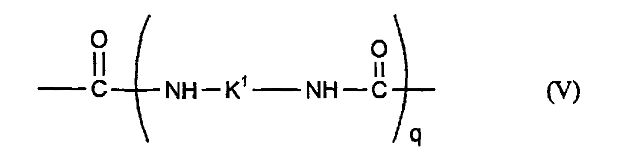 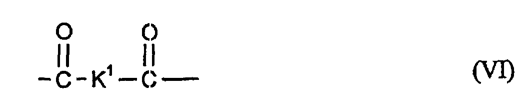 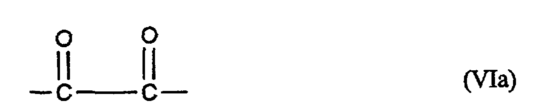 wobei
n jeweils unabhängig voneinander für 0 oder 1 steht,
q 0 oder 1 bedeutet,
R¹ und R² unabhängig voneinander für Halogen, Hydroxy, C₁-C₄-Alkoxy oder gegebenenfalls substituiertes Amin stehen,
K C₆-C₁₀-Arylen, Hetarylen, zwei voneinander unabhängige C₆-C₁₀-Aryleneinheiten, die direkt miteinander verbunden oder durch Hetarylen, C₁-C₆-Alkylen, C₂-C₆-Alkyliden oder Heteroatome unterbrochen sind, bedeutet,
K¹ zwei voneinander unabhängige C₁-C₆-Alkylen- und/oder C₂-C₆-Alkylideneinheiten, die direkt miteinander verbunden oder durch Hetarylen, C₆-C₁₀-Arylen oder Heteroatome unterbrochen sind bedeutet, oder die Bedeutung von K hat,
a, b und c unabhängig voneinander 1 oder 2 bedeuten,
a + c < 4,
a + b + c = 3 oder 5
und die freien Valenzen des Restes X jeweils mit der Azogruppe und die des Restes Y jeweils mit der Aminogruppe des mit b indizierten bivalenten Restes verknüpft sind.

2. Azofarbstoffe der Formel I gemäß Anspruch 1, die der Formel VII entsprechen, 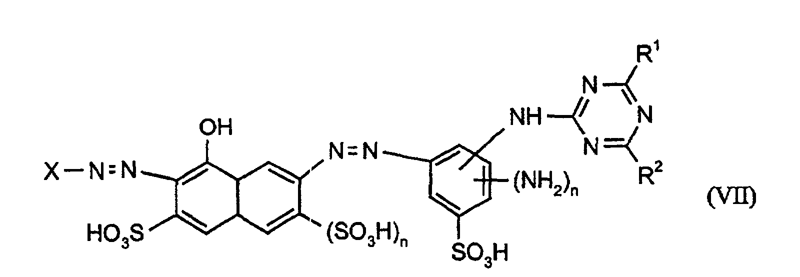 worin
R¹ und R² unabhängig voneinander ein substituiertes oder unsubstituiertes Amin bedeuten und der monovalente Rest X die Bedeutung gemäß Anspruch 1 hat.

3. Azofarbstoffe der Formel I gemäß Anspruch 1, die der Formel VIII entsprechen, 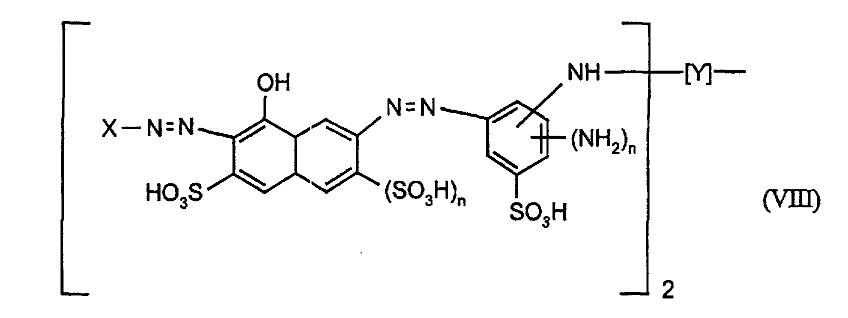 worin
X die Bedeutung des monovalenten Restes der Formel (II) gemäß Anspruch 1 und
Y die Bedeutung des bivalenten Restes gemäß Anspruch 1 besitzt.

4. Azofarbstoffe der Formel I gemäß Anspruch 1, die der Formel IX entspechen, 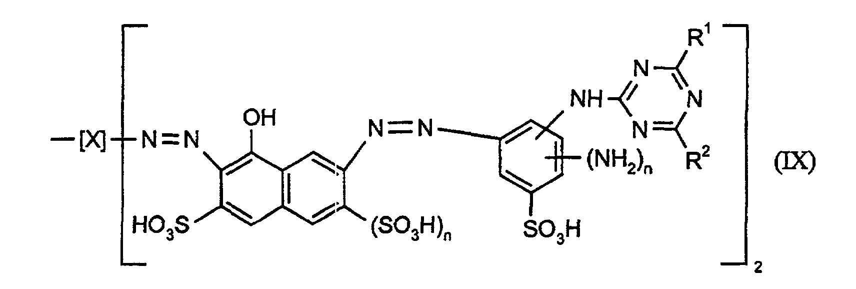 worin
R¹ und R² unabhängig voneinander für ein unsubstituiertes oder substituiertes Amin stehen und
X die Bedeutung des bivalenten Restes K gemäß Anspruch 1 besitzt.

5. Azofarbstoffe gemäß Anspruch 1, worin X einen Rest der Formeln IIa-IIf 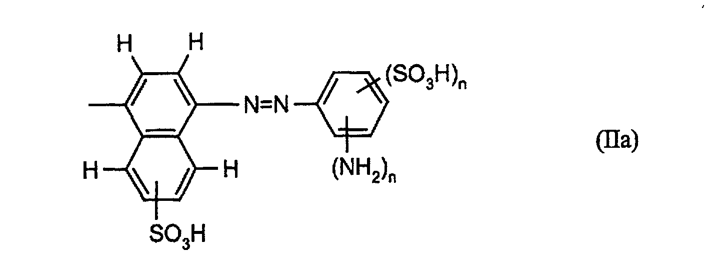 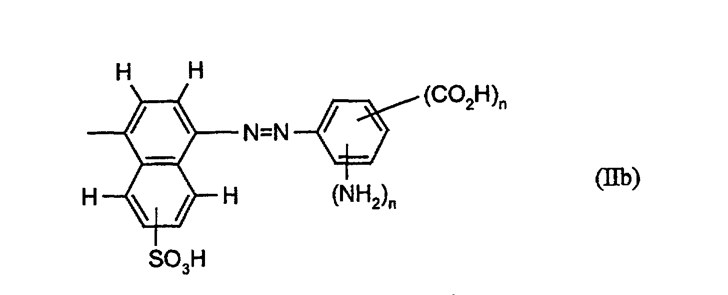 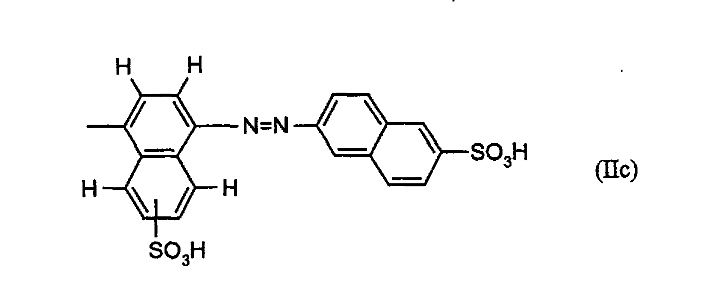 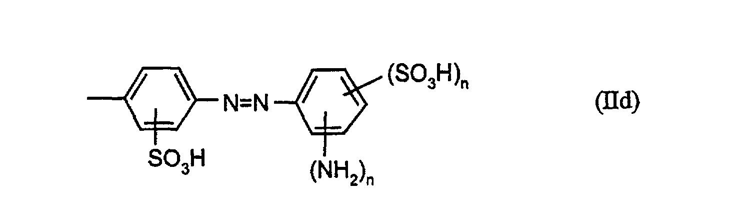 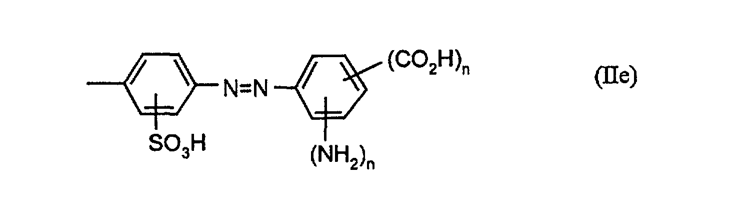 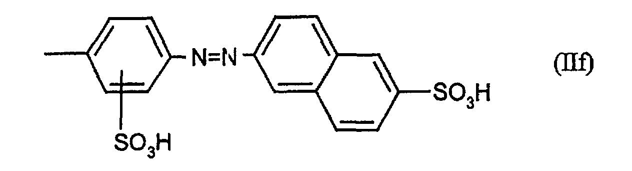 bedeutet oder für einen bivalenten Rest K steht, der die Bedeutung gemäß Anspruch 1 besitzt.

6. Azofarbstoffe gemäß Anspruch 1, worin
R¹ und R² unabhängig voneinander Fluor, Chlor, Brom oder eine Aminogruppe der Formel NR³R⁴ bedeuten, wobei
R³ H oder einen unsubstituierten oder durch Carboxy, Hydroxy, Amino, Sulfo, Sulfato und/oder C₁-C₄-Alkoxy substituierten C₁-C₁₀-Alkyl-, C₁-C₁₀-Cycloalkyl- oder C₆-C₁₀-Ar-C₁-C₁₀-Alkylrest bedeutet,
R⁴ die Bedeutung von R³ hat oder für einen unsubstituierten oder durch Hydroxy, Carboxy, Sulfo, C₁-C₄-Alkyl und/oder C₁-C₄-Alkoxy substituierten C₆-C₁₀-Arylrest steht oder
R³ und R⁴ zusammen mit dem Stickstoffatom, an das sie gebunden sind, einen heterocyclischen 5- oder 6-Ring bilden, der gegebenenfalls ein weiteres Heteroatom enthält.

7. Azofarbstoffe gemäß Anspruch 6, worin NR³R⁴ für NH₂, NHCH₃, N(CH₃)₂, N(C₂H₅)₂, NHC₂H₅, NHCH₂CH₂OH,
NHCH₂CH₂OCH₃, N(C₂H₄OH)₂, 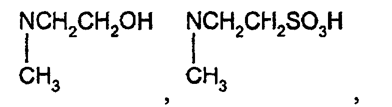 NHCH₂CH₃, 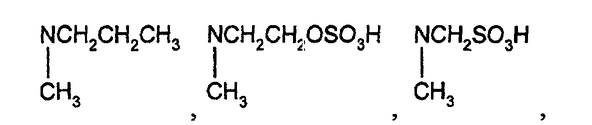 HNCH₂CH₂OSO₃H, NHCH₂CH₂SO₃H, NHCH(CH₃)₂, 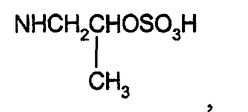 NHCH₂COOH, 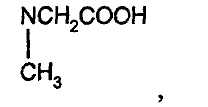 NHCH₂CH₂COOH, N(C₂H₄OSO₃H)₂, NH(CH₂)₁₀COOH,
NH(CH₂CH₂NH)ₚ-CH₂CH₂NH₂(p=0-4), NHCH₂CH₂N(CH₃)CH₂CH₂OH, 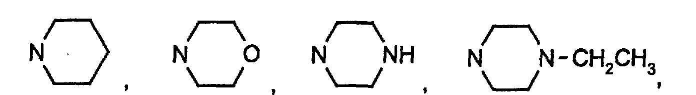 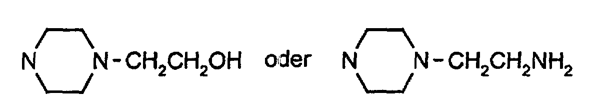 steht.

8. Azofarbstoffe der Formel I gemäß Anspruch 1,
worin der bivalente Rest K 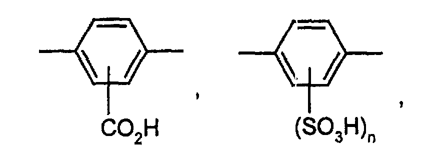 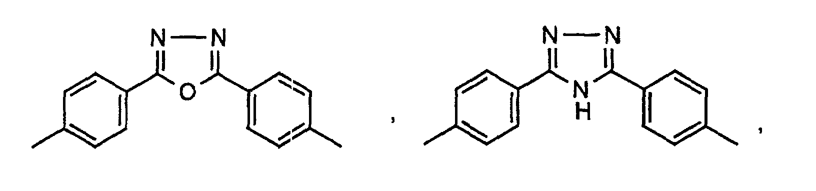 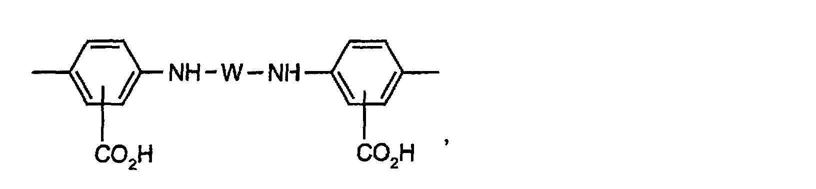 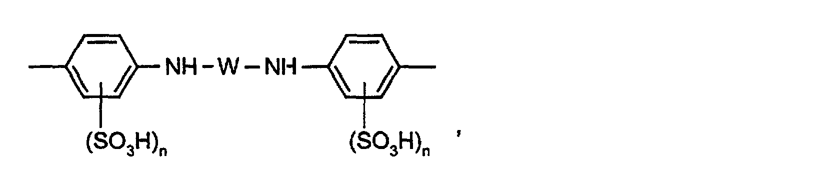 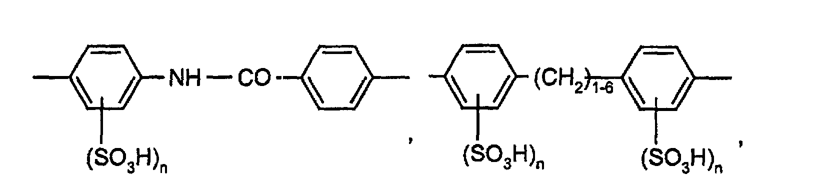 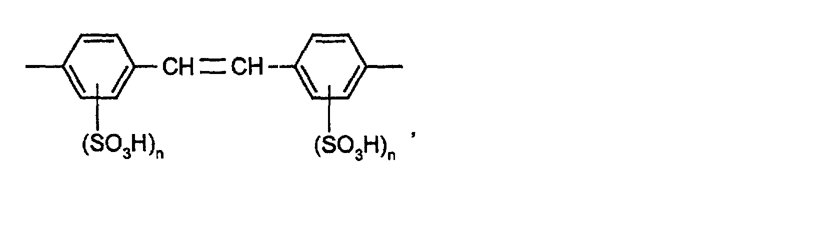 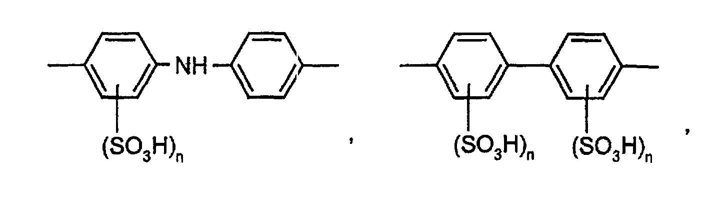 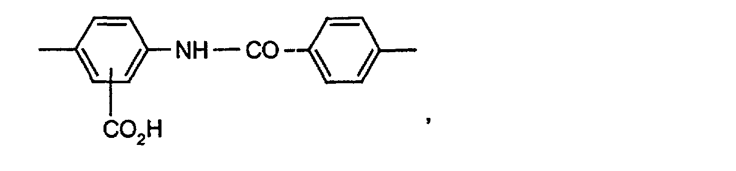 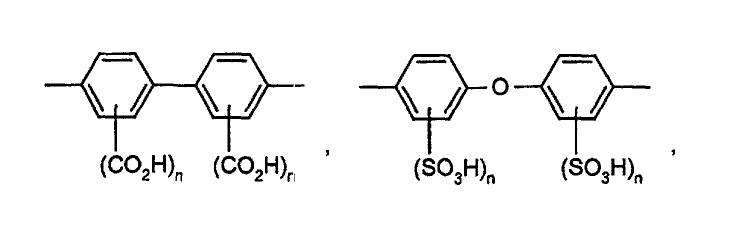 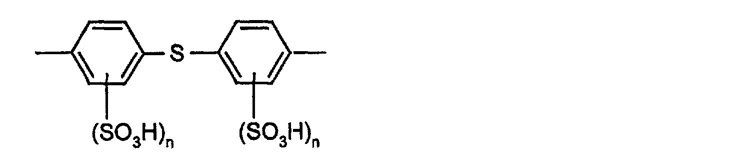 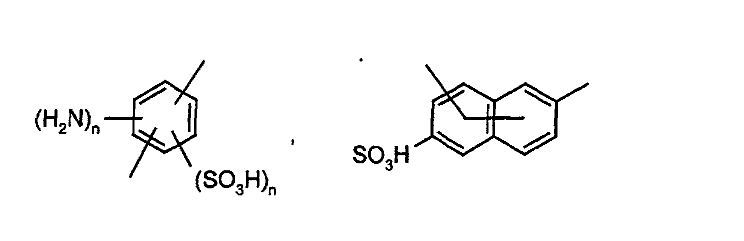 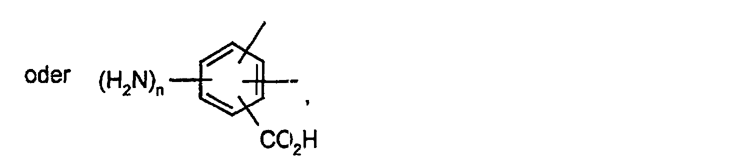 bedeutet, wobei bei mehreren n-indizierten Substituenten pro Molekül n jeweils unabhängig voneinander für 0 oder 1 steht, und
W für 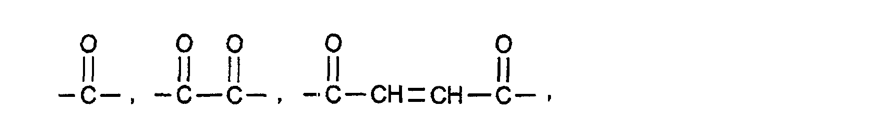 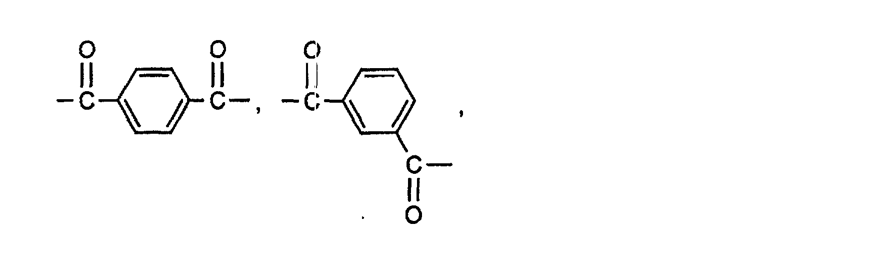 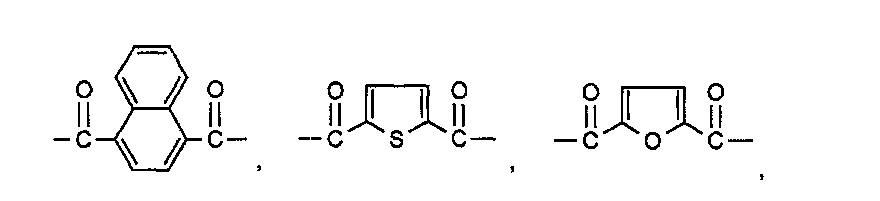 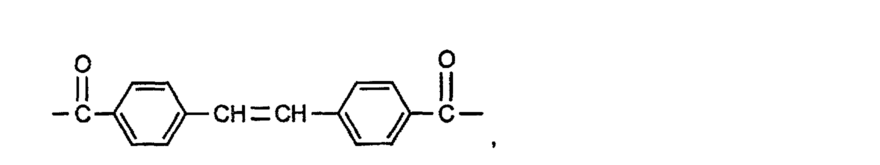 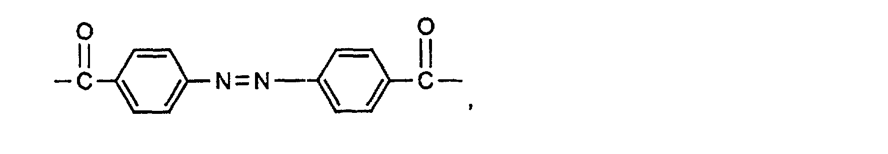 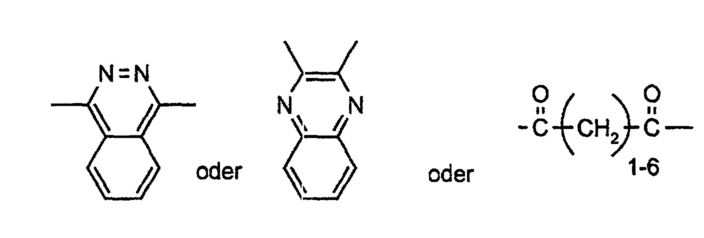 steht.

9. Verfahren zur Herstellung von Farbstoffen der Formel (I), **dadurch gekennzeichnet, daß** man Farbbasen der Formel (X) 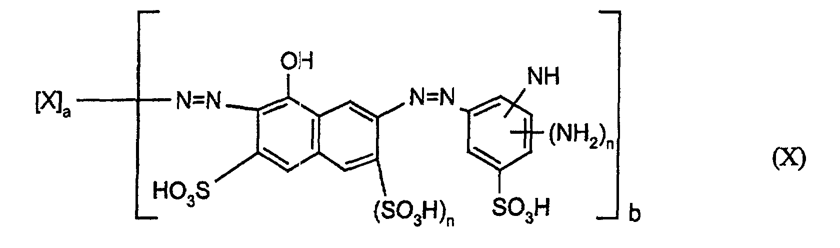 worin
n und X die in Anspruch 1 angegebene Bedeutungen besitzen,
a = 1 und
b = 1 für den Fall, daß X für einen monovalenten Rest steht und
b = 2 für den Fall, daß X für einen bivalenten Rest steht,
mit einer Verbindung der Formeln XIa bis XIe 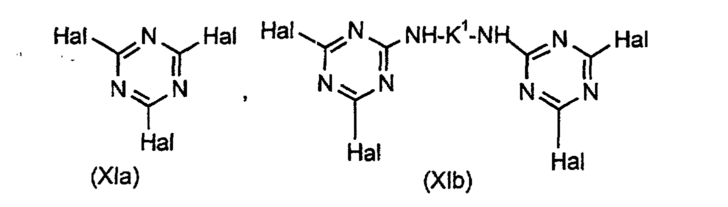 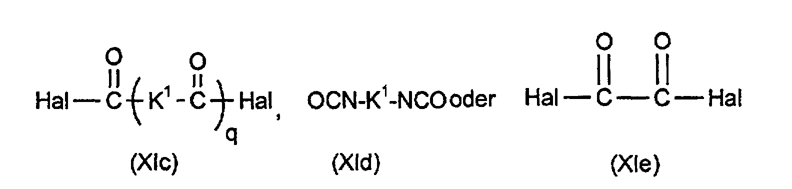 umsetzt, worin
K¹ und q die in Anspruch 1 angegebenen Bedeutungen besitzen und
Hal jeweils unabhängig voneinander für Fluor, Chlor oder Brom steht,
und gegebenenfalls weiter umsetzt zu Verbindungen der Formel (I), worin R¹ und R² Hydroxy, C₁-C₄-Alkoxy oder ein substituiertes oder unsubstituiertes Amin bedeuten.

10. Verwendung von Azofarbstoffen gemäß Anspruch 1 zum Färben von cellulosehaltigen Materialien, insbesondere Papier, Baumwolle, Viskose und Leder.

11. Flüssige Farbstoffpräparationen, insbesondere Tinten, enthaltend mindestens einen Farbstoff gemäß Anspruch 1.

## Claims

1. Azo dyestuffs of the formula (I) 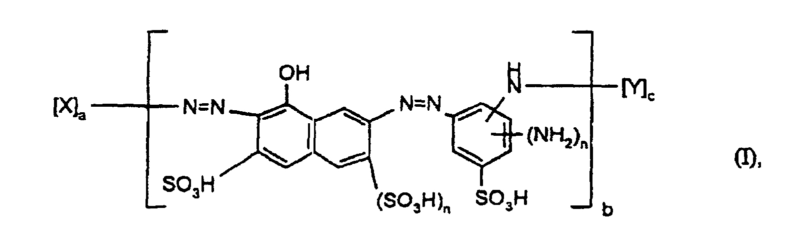 wherein
X denotes a radical of the formula (II) 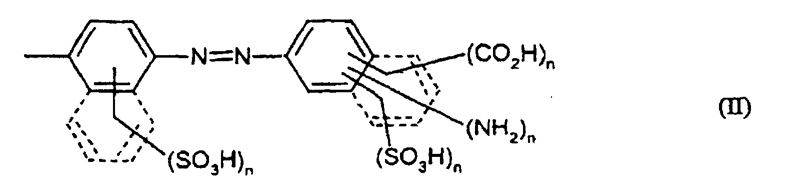
or represents a bivalent radical
-K-
and
Y represents a radical of the formula III 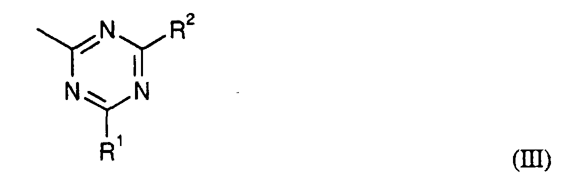
or represents a bivalent radical of the formulae IV to VIa 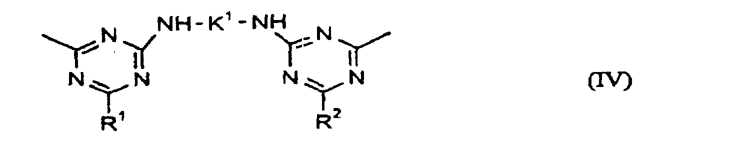 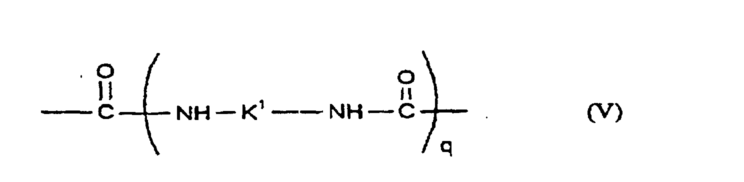 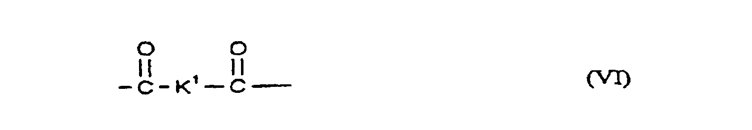 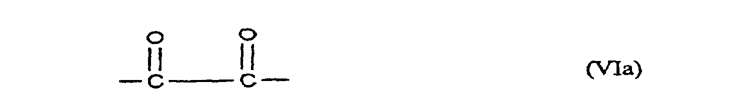 wherein
n in each case independently of one another represents 0 or 1,
q denotes 0 or 1,
R¹ and R² independently of one another represent halogen, hydroxyl, C₁-C₄-alkoxy or optionally substituted amine,
K denotes C₆-C₁₀-arylene, hetarylene, two C₆-C₁₀-arylene units which are independent of one another and are bonded directly to one another or are interrupted by hetarylene, C₁-C₆-alkylene, C₂-C₆-alkylidene or hetero atoms,
K¹ denotes two C₁-C₆-alkylene and/or C₂-C₆-alkylidene units which are independent of one another and are bonded directly to one another or interrupted by hetarylene, C₆-C₁₀-arylene or hetero atoms, or has the meaning of K
a, b and c independently of one another denote 1 or 2,
a + c < 4,
a + b + c = 3 or 5
and the free valencies of the radical X are in each case linked to the azo group and those of the radical Y are in each case linked to the amino group of the bivalent radical with the index b.

2. Azo dyestuffs of the formula I according to Claim 1, which correspond to the formula VII 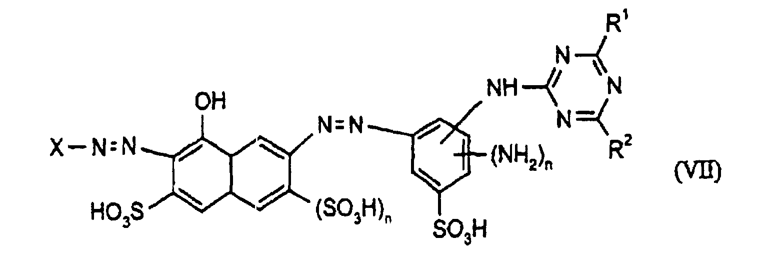 wherein
R¹ and R² independently of one another denote a substituted or unsubstituted amine and the monovalent radical X has the meaning according to Claim 1.

3. Azo dyestuffs of the formula I according to Claim 1, which correspond to the formula VIII 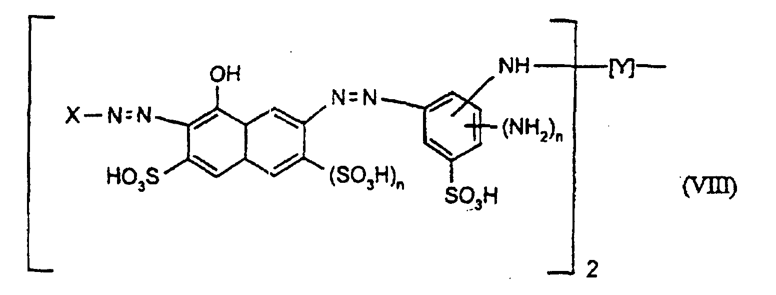 wherein
x has the meaning of the monovalent radical of the formula (II) according to Claim 1, and
Y has the meaning of the bivalent radical according to Claim 1.

4. Azo dyestuffs of the formula I according to Claim 1, which correspond to the formula IX 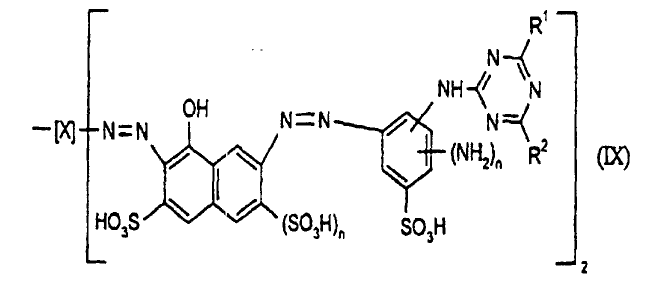 wherein
R¹ and R² independently of one another represent an unsubstituted or substituted amine and
X has the meaning of the bivalent radical K according to Claim 1.

5. Azo dyestuffs according to Claim 1, wherein X denotes a radical of the formulae IIa-IIf 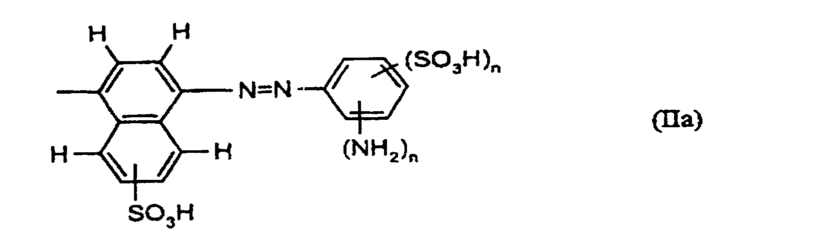 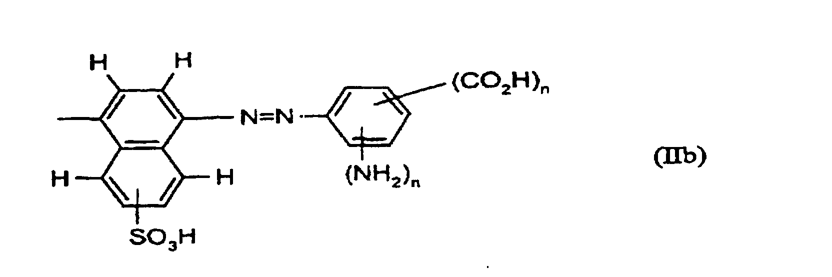 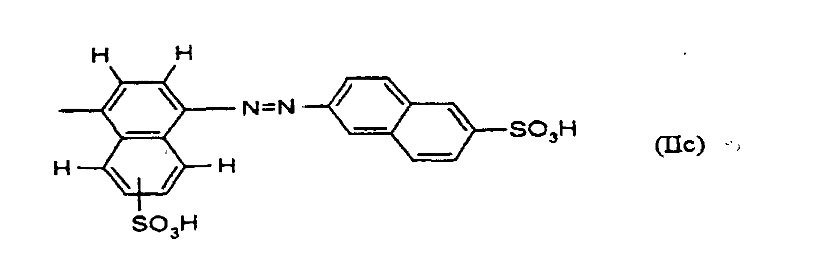 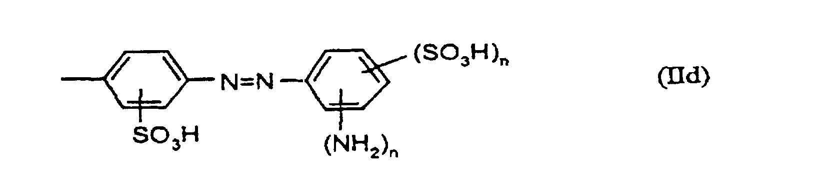 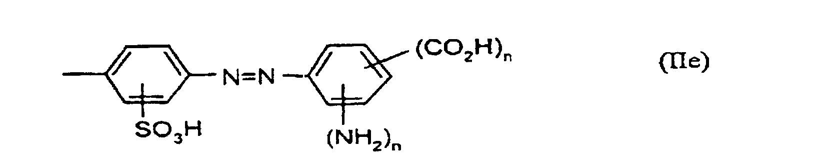 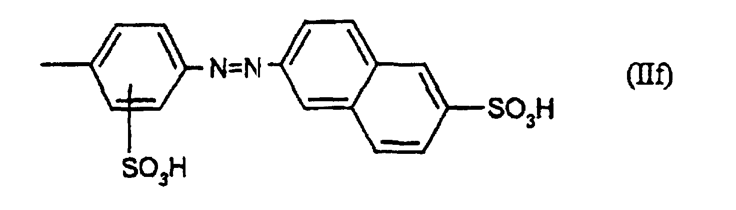 or represents a bivalent radical K, which has the meaning according to Claim 1.

6. Azo dyestuffs according to Claim 1, wherein
R¹ and R² independently of one another denote fluorine, chlorine, bromine or an amino group of the formula NR³R⁴, wherein
R³ denotes H or a C₁-C₁₀-alkyl, C₁-C₁₀-cycloalkyl or C₆-C₁₀-Ar-C₁-C₁₀-alkyl radical which is unsubstituted or substituted by carboxyl, hydroxyl, amino, sulpho, sulphato and/or C₁-C₄-alkoxy,
R⁴ has the meaning of R³ or represents a C₆-C₁₀-aryl radical which is unsubstituted or substituted by hydroxyl, carboxyl, sulpho, C₁-C₄-alkyl and/or C₁-C₄-alkoxy, or
R³ and R⁴, together with the nitrogen atom to which they are bonded, form a heterocyclic 5- or 6-membered ring, which optionally contains a further hetero atom.

7. Azo dyestuffs according to Claim 6, wherein NR³R⁴ represents NH₂, NHCH₃, N(CH₃)₂, N(C₂H₅)₂, NHC₂H₅, NHCH₂CH₂OH, NHCH₂CH₂OCH₃, N(C₂H₄OH)₂, 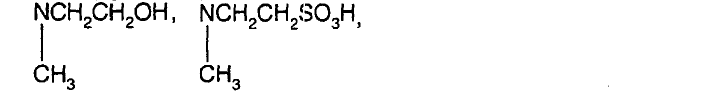 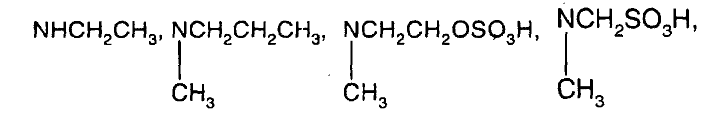 HNCH₂CH₂OSO₃H, NHCH₂CH₂SO₃H, NHCH(CH₃)₂, 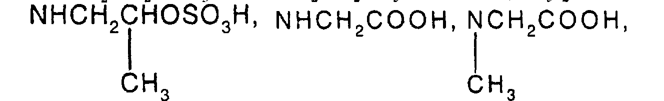 NHCH₂CH₂COOH, N(C₂H₄OSO₃H)₂, NH(CH₂)₁₀COOH, NH(CH₂CH₂NH)ₚ-CH₂CH₂NH₂ (p=0-4), NHCH₂CH₂N(CH₃)CH₂CH₂OH,

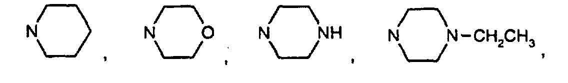

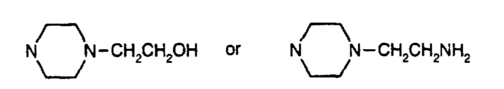

8. Azo dyestuffs of the formula I according to Claim 1, wherein the bivalent radical K denotes 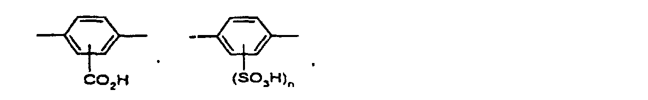 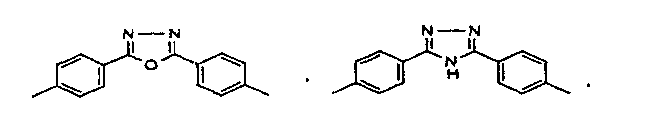 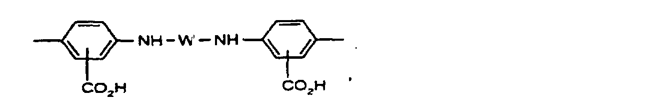 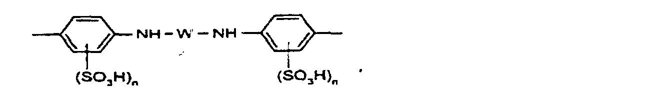 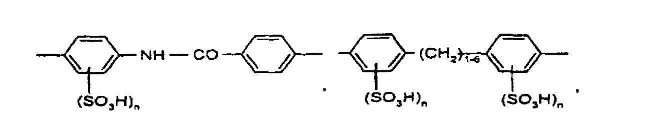 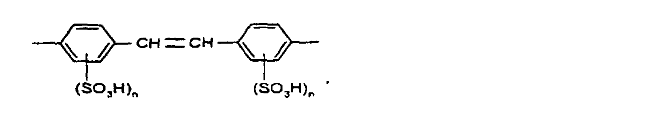 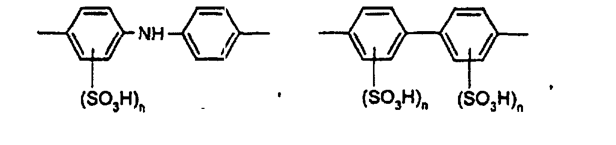 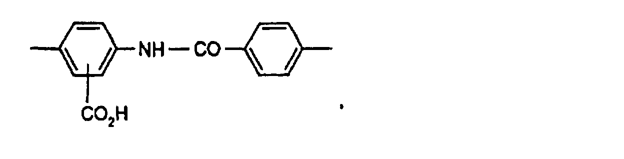 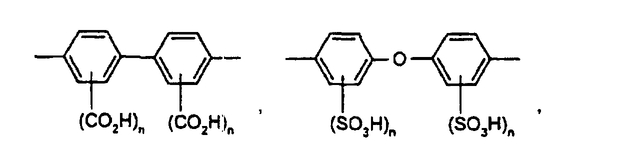 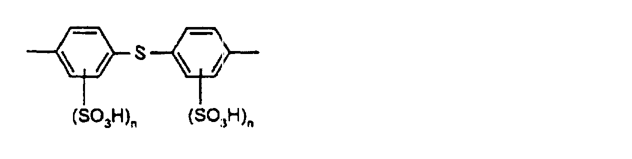 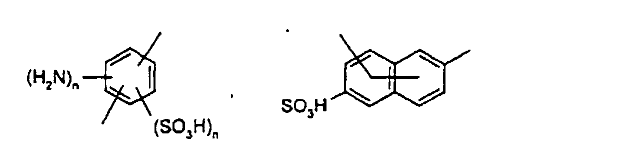 or 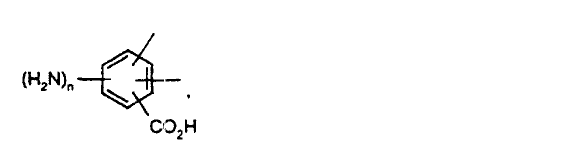 wherein, in the case of several substituents having the index n per molecule, n in each case independently of one another represents 0 or 1, and
W represents

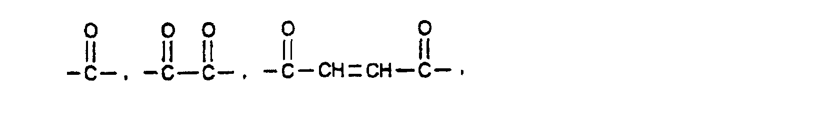

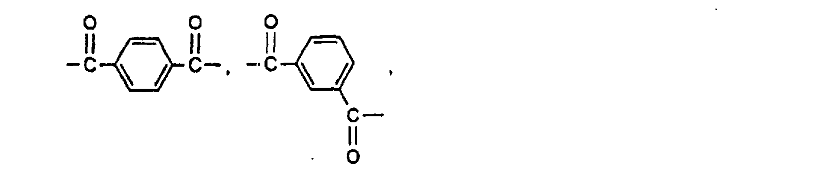

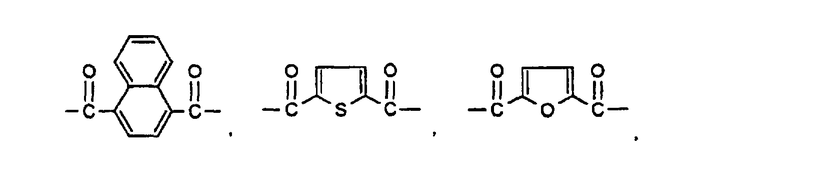

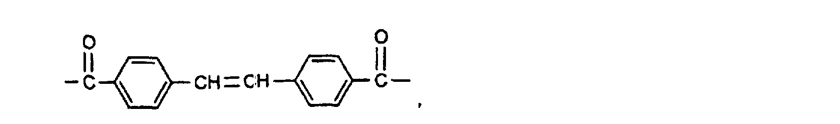

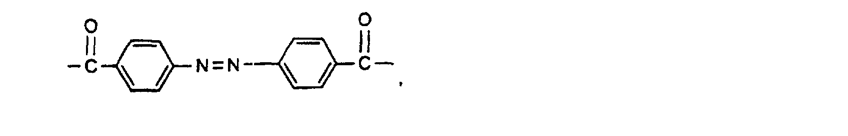

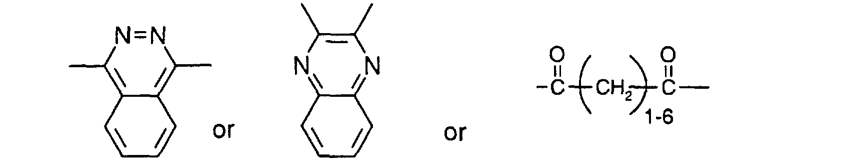

9. Process for the preparation of dyestuffs of the formula (I), **characterized in that** colour bases of the formula (X) 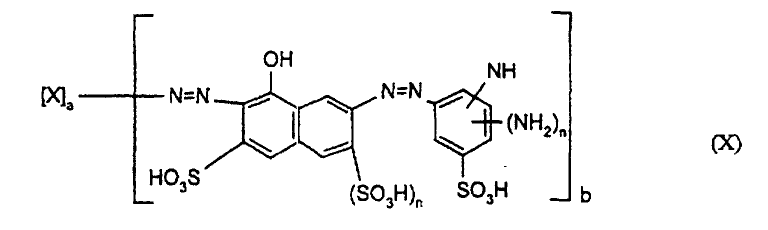 wherein
n and X have the meanings given in Claim 1,
a = 1 and
b = 1 if X represents a monovalent radical and
b = 2 if X represents a bivalent radical,
are reacted with a compound of the formula XIa to XIe 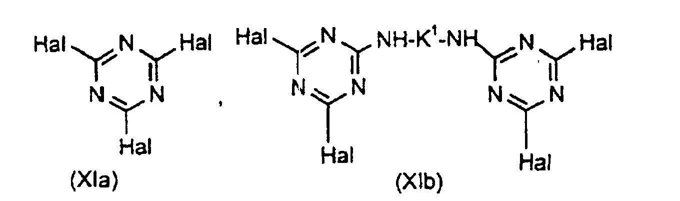 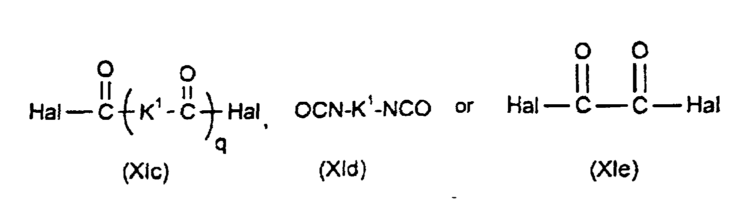 wherein
K¹ and q have the meanings given in Claim 1 and
Hal in each case independently of one another represents fluorine, chlorine or bromine,
and if appropriate the products are reacted further to give compounds of the formula (I) wherein R¹ and R² denote hydroxyl, C₁-C₄-alkoxy or a substituted or unsubstituted amine.

10. Use of azo dyestuffs according to Claim 1 for dyeing cellulose-containing materials, in particular paper, cotton, viscose and leather.

11. Liquid dyestuff preparations, in particular inks, comprising at least one dyestuff according to Claim 1.

## Revendications

1. Colorants azoïques de formule (I) 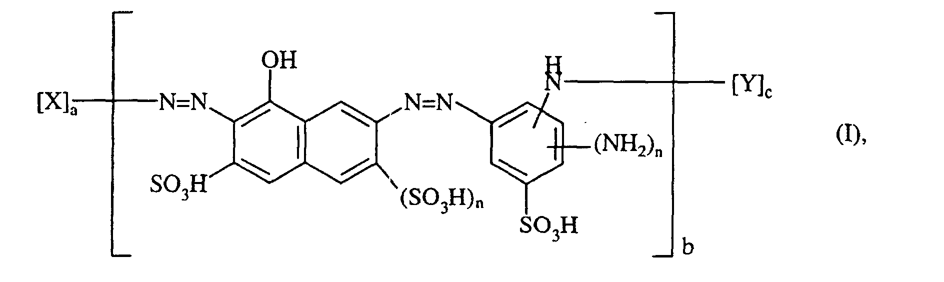 dans laquelle
X représente un radical de formule (II) 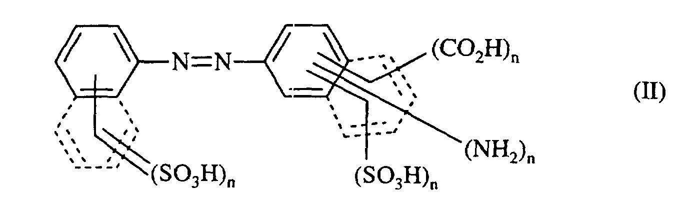
ou un radical bivalent
-K-
et
Y représente un radical de formule (III) 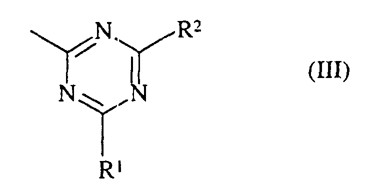
ou un radical bivalent de formule (IV) à (VIa), 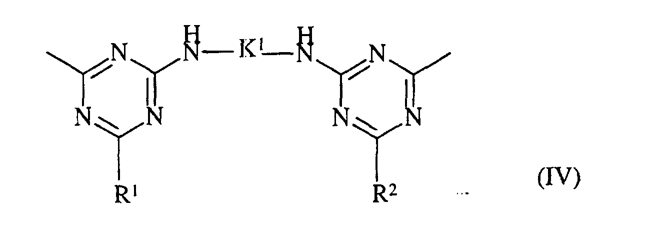 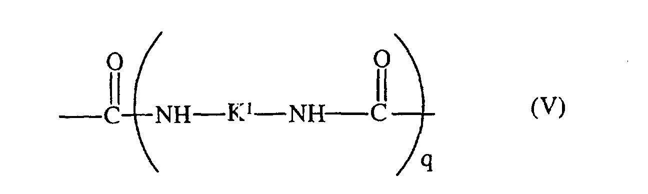 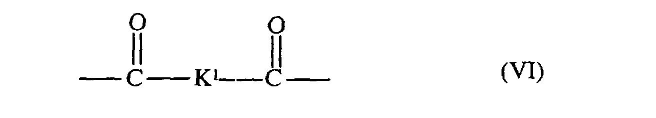 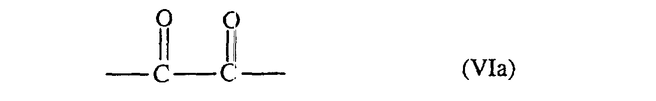 dans lesquelles
les symboles n sont égaux chacun, indépendamment les uns des autres, à 0 ou 1,
q est égal à 0 ou 1,
R¹ et R² représentent chacun, indépendamment l'un de l'autre, un halogène, un groupe hydroxy, alcoxy en C₁-C₄ ou amino éventuellement substitué,
K représente un groupe arylène en C₆-C₁₀, hétéroarylène, deux motifs arylènes en C₆-C₁₀ indépendants l'un de l'autre qui sont reliés entre eux directement ou sont interrompus par un radical hétéroarylène, alkylène en C₁-C₁₀, alkylidène en C₂-C₆ ou des hétéroatomes,
K¹ représente deux motifs alkylènes en C₁-C₆ et/ou alkylidènes en C₂₋C₆ indépendants l'un de l'autre qui sont reliés entre eux directement ou sont interrompus par un radical hétéroarylène, arylène en C₆-C₁₀ ou des hétéroatomes, ou bien K¹ a les significations de K,
a, b et c sont égaux chacun, indépendamment les uns des autres, à 1 ou 2,
a + c < 4,
a + b + c = 3 ou 5,
et les valences libres du radical X sont reliées chacune au groupe azo et celles du radical Y au groupe amino du radical bivalent portant l'indice b.

2. Colorants azoïques de formule (I) selon la revendication 1, qui répondent à la formule (VII) 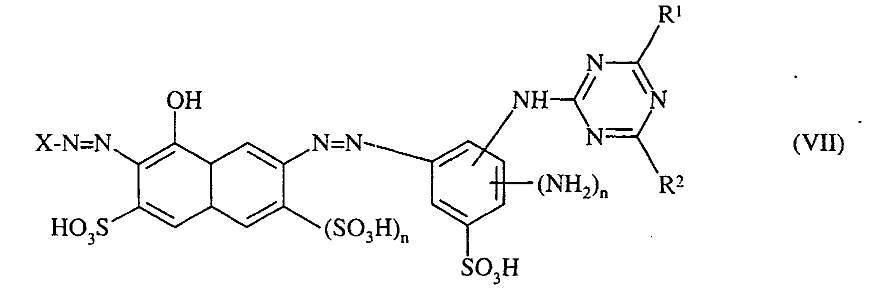 dans laquelle
R¹ et R² représentent chacun, indépendamment l'un de l'autre, un groupe amino substitué ou non et X représente un radical monovalent tel que mentionné dans la revendication 1.

3. Colorants azoïques de formule (I) selon la revendication 1, répondant à la formule (VIII) 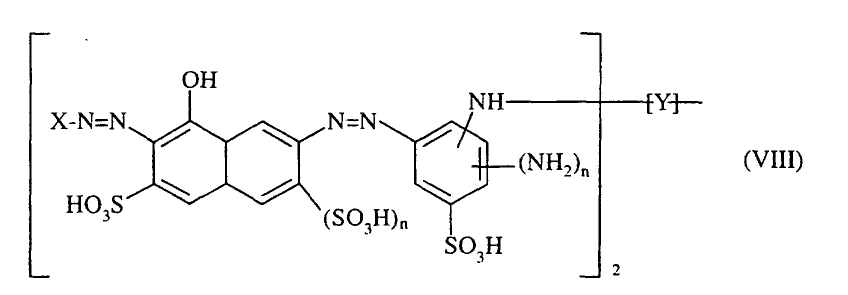 dans laquelle
x représente le radical monovalent de formule (II) de la revendication 1 et
Y représente le radical bivalent de la revendication 1.

4. Colorants azoïques de formule (I) selon la revendication 1, répondant à la formule (IX) 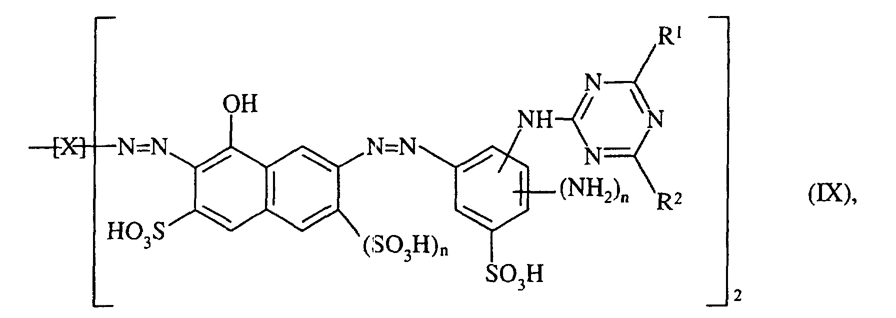 dans laquelle
R¹ et R² représentent chacun, indépendamment l'un de l'autre, un groupe amino substitué ou non et
x représente le radical bivalent K de la revendication 1.

5. Colorants azoïques selon la revendication 1, pour lesquels X représente un radical de formule (IIa) à (IIf) 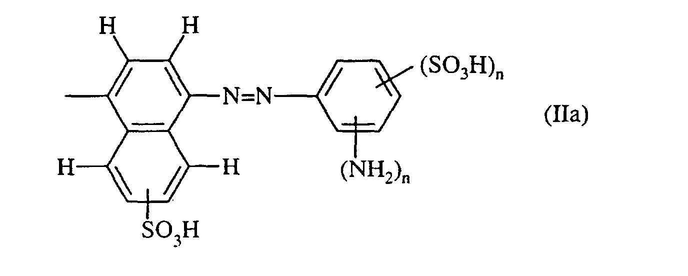 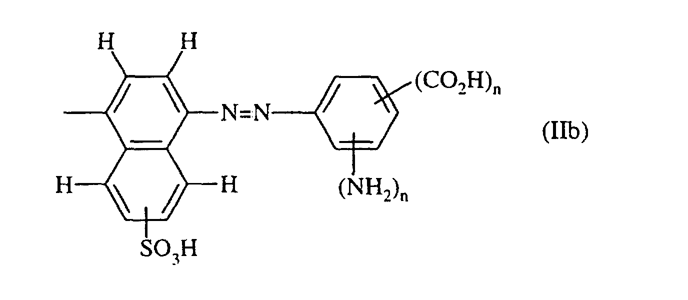 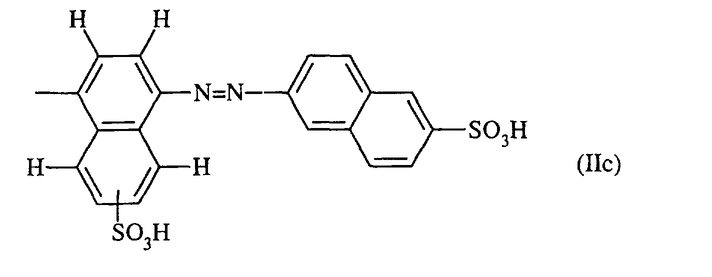 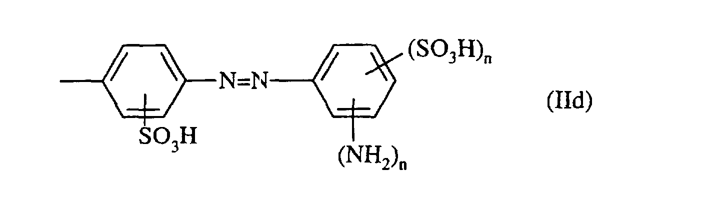 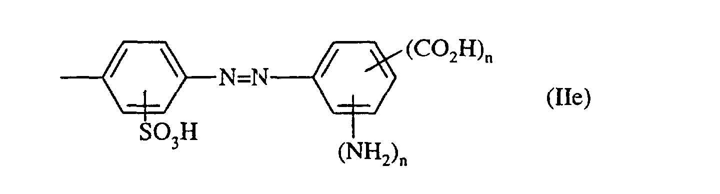 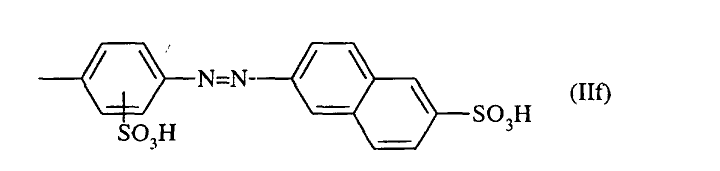 ou le radical bivalent K de revendication 1.

6. Colorants azoïques selon la revendication 1, pour lesquels
R¹ et R² représentent chacun, indépendamment l'un de l'autre, le fluor, le chlore, le brome ou un groupe amino de formule NR³R⁴ dans lequel
R³ représente H ou un groupe alkyle en C₁-C₁₀, cycloalkyle en C₁-C₁₀ ou (aryle en C₆-C₁₀)-alkyle en C₁-C₁₀ non substitué ou portant des substituants carboxy, hydroxy, amino, sulfo, sulfato et/ou alcoxy en C₁-C₄,
R⁴ a les mêmes significations que R³ ou représente un groupe aryle en C₆-C₁₀ non substitué ou portant des substituants hydroxy, carboxy, sulfo, alkyle en C₁-C₄ et/ou alcoxy en C₁-C₄, ou bien
R³ et R⁴ forment ensemble et avec l'atome d'azote auquel ils sont reliés un hétérocycle à 5 ou 6 chaînons qui peut le cas échéant contenir un autre hétéroatome.

7. Colorants azoïques selon la revendication 6, pour lesquels NR³R⁴, représente NH₂, NHCH₃, N(CH₃)₂, N(C₂H5)₂, NHC₂H₅, NHCH₂CH₂OH, NHCH₂CH₂OCH₃, N(C₂H₄OH)₂, 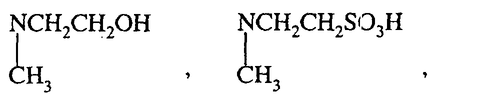 NHCH₂CH₃, 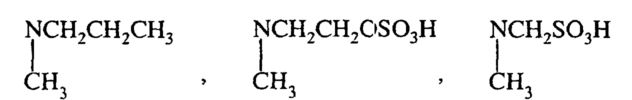 HNCH₂CH₂OSO₃H, NHCH₂CH₂SO₃H, NHCH(CH₃)₂, 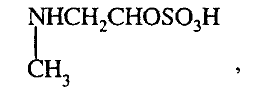 NHCH₂COOH, 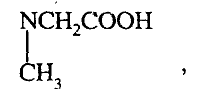 NHCH₂CH₂COOH, N(C₂H₄OSO₃H)₂, NH(CH₂)₁₀COOH,
NH(CH₂CH₂NH)ₚ-CH₂CH₂NH₂(p=0-4), NHCH₂CH₂N(CH₃)CH₂CH₂OH,

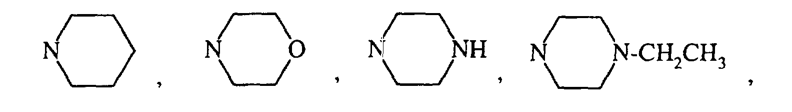

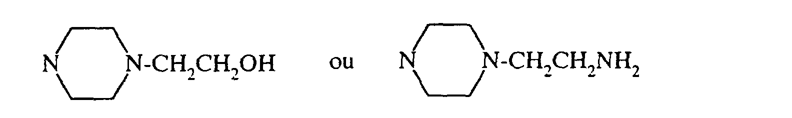

8. Colorants azoïques de formule (I) selon la revendication 1, dans laquelle le radical bivalent K est 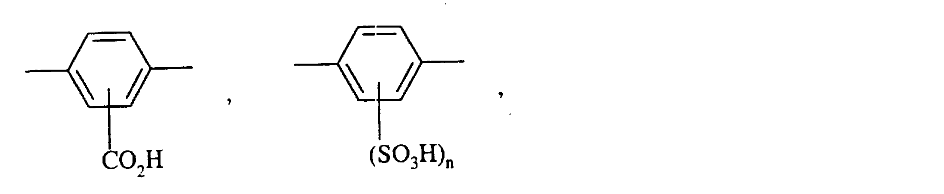 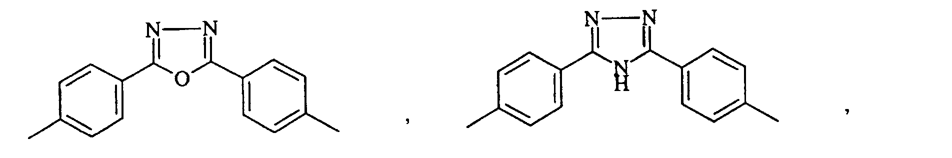 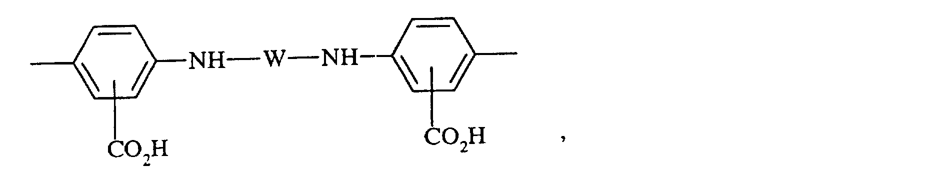 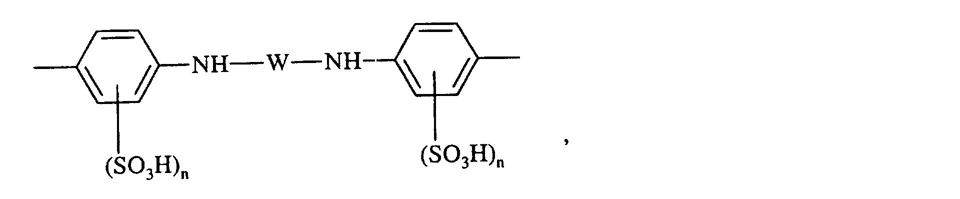 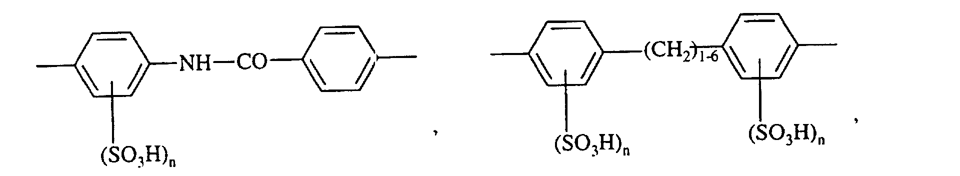 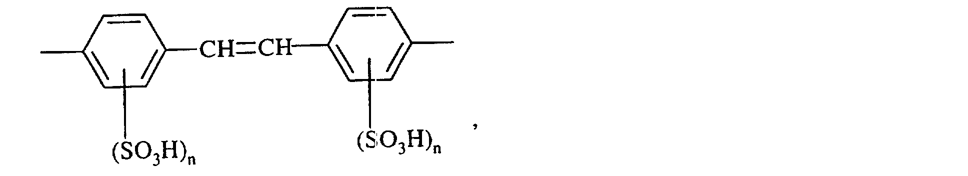 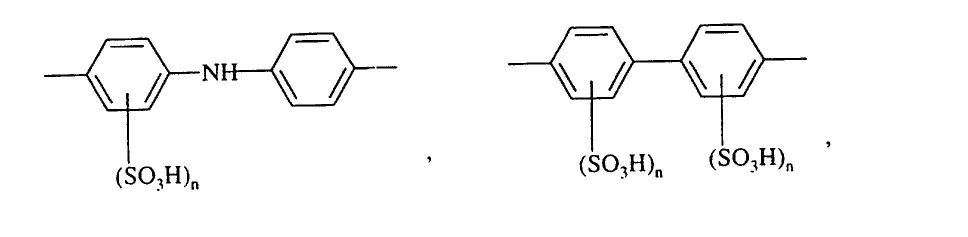 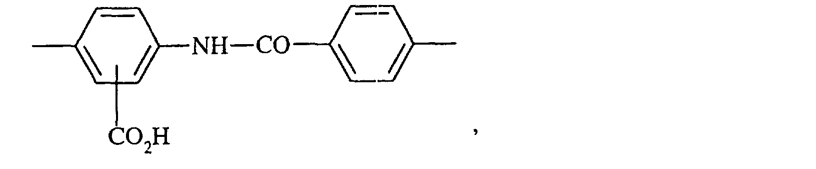 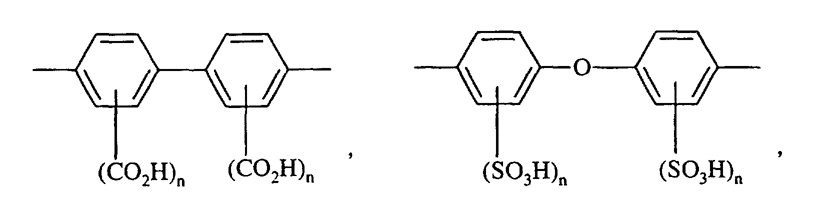 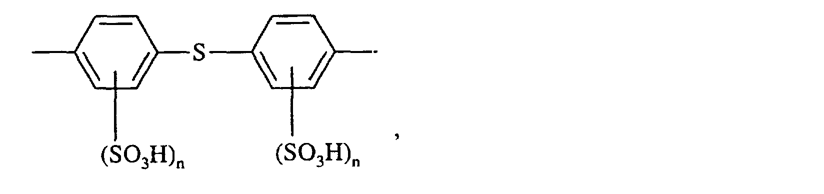 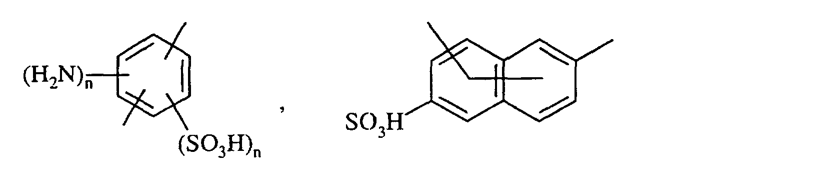 ou 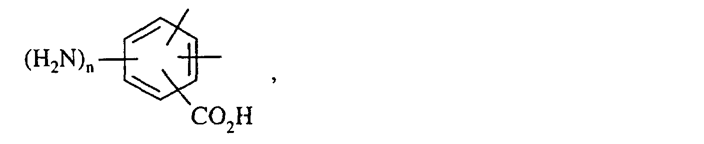 étant précisé que lorsqu'il y a plusieurs substituants d'indice n par molécule, ces indices n sont égaux chacun, indépendamment les uns des autres, à 0 ou 1, et
W représente

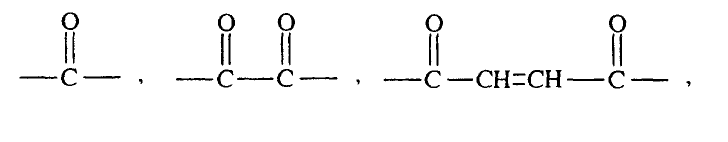

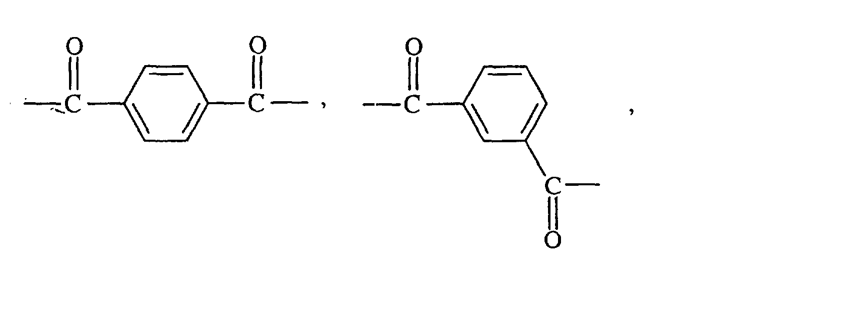

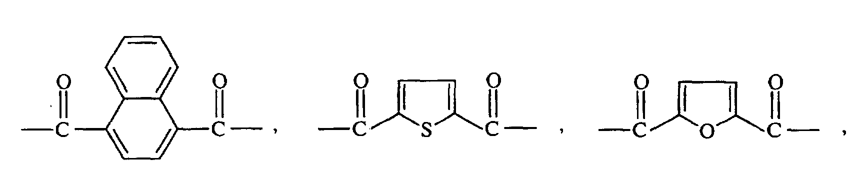

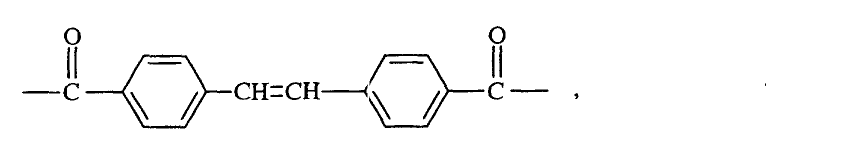

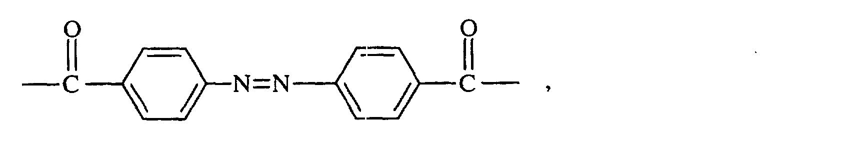

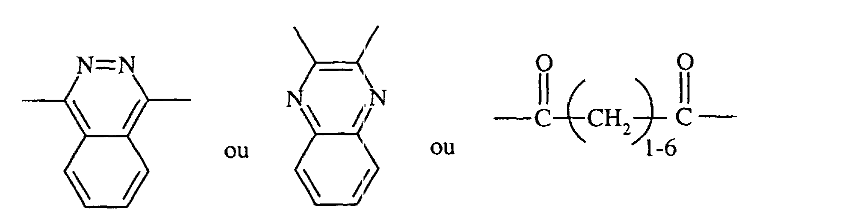

9. Procédé de préparation des colorants de formule (I), **caractérisé en ce que** l'on fait réagir des bases chromogènes de formule (X) 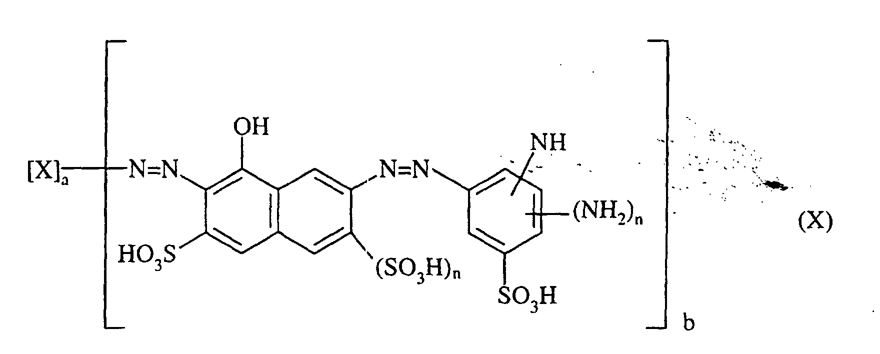 dans laquelle
n et X ont les significations indiquées dans la revendication 1,
a = 1 et
b = 1 lorsque X représente un radical monovalent et
b = 2 lorsque X représente un radical bivalent,
avec un composé de formule (XIa) à (XIe) 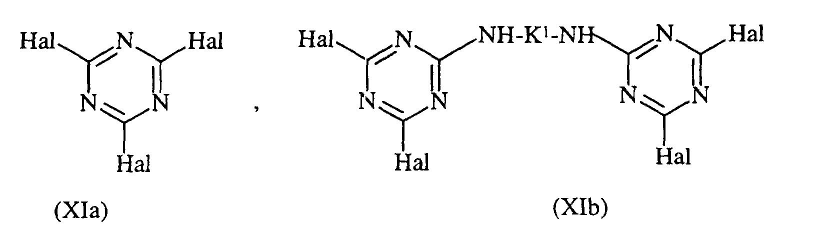 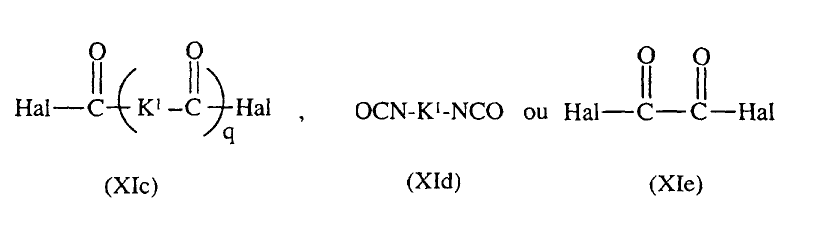 dans lesquelles
K¹ et q ont les significations indiquées dans la revendication 1 et les symboles Hal représentent chacun, indépendamment les uns des autres, le fluor, le chlore ou le brome,
et la cas échéant, on convertit ensuite en composés de formule (I) dans laquelle R¹ et R² représentent des groupes hydroxy, alcoxy en C₁-C₄ ou amino substitué ou non.

10. Utilisation des colorants azoïques selon la revendication 1 pour la coloration de matières contenant de la cellulose, en particulier du papier, du coton, de la viscose et du cuir.

11. Composition de colorants liquides, en particulier encres, contenant au moins un colorant selon la revendication 1.
